Europäisches Patentamt

European Patent Office

Office européen des brevets

(19)

(11)  **EP 1 495 288 B1**

(12)  **EUROPÄISCHE PATENTSCHRIFT**

(45) Veröffentlichungstag und Bekanntmachung des Hinweises auf die Patenterteilung:
**15.06.2005 Patentblatt 2005/24**

(21) Anmeldenummer: 03720502.8

(22) Anmeldetag: **17.04.2003**

(51) Int Cl.⁷: **G01C 21/36**

(86) Internationale Anmeldenummer:
**PCT/EP2003/004102**

(87) Internationale Veröffentlichungsnummer:
**WO 2003/087726 (23.10.2003 Gazette 2003/43)**

(54)  **ORTSABHÄNGIGE INFORMATIONSWIEDERGABE UNTER ANPASSUNG EINES GEOGRAPHISCHEN AUSWAHLPARAMETERS**

LOCAL INFORMATION REPRODUCTION ON MATCHING OF A GEOGRAPHICAL SELECTION PARAMETER

RESTITUTION D'INFORMATIONS EN FONCTION DU LIEU AVEC ADAPTATION D'UN PARAMETRE DE SELECTION GEOGRAPHIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **18.04.2002 DE 10217300**

(43) Veröffentlichungstag der Anmeldung:
**12.01.2005 Patentblatt 2005/02**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **LLOMBART-JUAN, Nuria**
  **46120 Alboraya (ES)**

• **GERHÄUSER, Heinz**
  **91344 Waischenfeld (DE)**
• **KORTE, Olaf**
  **91338 Igensdorf (DE)**
• **PLANKENBÜHLER, Roland**
  **90475 Nürnberg (DE)**
• **ZINK, Alexander**
  **96135 Stegaurach (DE)**

(74) Vertreter: **Schenk, Markus et al**
**Patentanwälte Schoppe, Zimmermann Stöckeler & Zinkler**
**Postfach 246**
**82043 Pullach (DE)**

(56) Entgegenhaltungen:
**DE-C- 4 445 582                    US-A- 5 717 392**

EP 1 495 288 B1

**Beschreibung**

Die vorliegende Erfindung bezieht sich auf Verfahren und Vorrichtungen zur ortsabhängigen Bereitstellung bzw. Wiedergabe von Informationen an einen Benutzer.

Systeme zur ortsabhängigen Informationswiedergabe sind im Stand der Technik bekannt und werden beispielsweise im Bereich von Museen zur automatischen Führung durch das Museum eingesetzt. Die wiederzugebenden Informationseinheiten beschreiben verschiedene Objekte, die an unterschiedlichen Standorten angeordnet sind. Die Systeme besitzen Kenntnis über den Benutzerstandort sowie über die Standorte der Informationseinheiten. Die Auswahl der wiederzugebenden Informationseinheit aus der Mehrzahl von Informationseinheiten erfolgt über sogenannte Auswahlkriterien. Diese Auswahlkriterien umfassen unter anderem geographische Auswahlkriterien und legen beispielsweise fest, in welcher Entfernung sich ein Objekt zu dem Benutzer maximal befinden darf, damit die entsprechende Informationseinheit in die engere Auswahl von Informationseinheiten einbezogen wird, von denen wiederum eine schließlich wiedergegeben werden soll. Jedes geographische Auswahlkriterium, wie z. B. die maximale Entfernung eines Objekts zu dem Benutzer, ist für die spezifische Anwendung des Systems ausgelegt, wie z.B. im Fall des Museumsbesucherführungssystems auf die entsprechenden Bedingungen im Rahmen eines Museumsbesuches.

Bisherige Systeme der im vorhergehenden beschriebenen Ar versagen bei dem Versuch dieselben bei Anwendungen einzusetzen, bei denen sich stark verändernde bzw. variierende Umgebungs- und Situationsbedingungen vorliegen, da dieselben in Situationen bzw. Umgebungen, für welche sie nicht ausgelegt sind, zu einer wenig sinnvollen Auswahl der wiederzugebenden Informationseinheiten führen. Bei Einsatz des oben beschrieben Museumsführers in einem Freiluftmuseum beispielsweise, bei dem die Museumsbesucher sowohl Ausstellungsräume als auch Spazierwege ablaufen, führt die Auslegung der geographischen Auswahlparameter auf einen der beiden Umgebungen bzw. Situationen, nämlich außen oder innen, zu einer wenig sinnvollen Auswahl bei der jeweils anderen Umgebung.

Ein Beispiel für ein System nach der oben beschriebenen Art ist beispielsweise in der DE 10039663 A1 beschrieben.

Es besteht folglich ein Bedarf nach Systemen zur ortsabhängigen Informationswiedergabe, die universeller einsetzbar sind und zudem zu einer effektiveren Auswahl der wiederzugebenden Informationseinheiten führen.

Dokument EP 0 994 448 beschreibt ein Informationswiedergabesystem dass statistische Kenngrössen ermittelt und benutzt dafür eine festeingestellte Zeitdauer was zum Beispiel ein Problem während einer Fahrt in einen Stadtzentrum sein kann. Während einer Stadtfahrt kann der Verkehrszustand sich innerhalb 10 Minuten (in Dokument EP 0 994 448 wird exemplarisch 10 Minuten benutzt) drastisch ändern. Auf Grund der Mittelung werden also kurze Fahrabschnitte innerhalb Strecken im Stadtzentrum "weggemittelt", wodurch es möglich ist dass dem Autofahrer Informationen vorenthalten werden. Das Zeitfenster wird im informationwiedergabesystem der Anmeldung dynamisch geändert.

Die DE 19841169 C1 beschreibt ein Verfahren und eine Vorrichtung zur Bereitstellung von Informationsdaten im Zusammenhang mit einem GPS-System. Die in einem Datenträger befindlichen Informationsdaten werden in Abhängigkeit von den aktuellen Ortsdaten und den aktuellen Bewegungsgeschwindigkeitsdaten über eine optische und/ oder akustische AusgabeEinrichtung wiedergegeben. Genauer ausgedrückt, basiert die Auswahl der wiederzugebenden Informationsdatei aus den bereitgestellten Informationsdateien darin, zunächst für eine bestimmte Voraus-Distanz die relevanten Informationsdaten herauszufinden, und sodann dieselben in der Reihenfolge abzuspielen, daß das nächste abzuspielende Informationsdatum dasjenige ist, das bei höchster Priorität im Zeitfenster bis zum prognostizierten Endpunkt seiner Gültigkeit für die Strecke abgespielt werden kann. Zur Auswahl der wiederzugebenden Information wird folglich eine sequentielle Anwendung fester Auswahlkriterien verwendet. Zunächst wird ein Auswahlkriterium angewandt, das aus allen Informationen nur diejenigen auswählt, die Objekte beschreiben, die zu einem prognostizierten Voraus-Weg relevant sind, bzw. über einen bestimmten Streckenbereich wiedergebbar sind. Aus diesen Informationen werden wiederum diejenigen mit der höchsten Priorität herausgefiltert, wobei jedoch berücksichtigt wird, daß der Benutzer mit einer erfaßten Geschwindigkeit fährt, und daß deshalb die von den Informationen betroffenen Streckenbereiche je nach Geschwindigkeit verschieden lange durchfahren werden, so daß nur diejenigen Informationen abgespielt werden, die von ihrer Abspieldauer her ausreihend kurz sind.

Die DE 69310938 T2 beschreibt ein System mit elektronischer verbaler touristischer Anweisung. Das System ermöglicht die Suche nach Informationen auf Datenbasis bezüglich der unmittelbaren Umgebung einer ausgewählten oder ermittelten Position und ihre Weitergabe an den Benutzer, und zwar auf Aufforderung oder automatisch. Das System ist zum einen in der Lage, auf Anfrage nach einer Information durch den Benutzer passende Antworten im Hinblick auf den betreffenden Umkreis in wachsender Größenordnung der Entfernung anzuzeigen und/oder sie sprachlich aufzuzählen. Gemäß einer weiteren Funktionsweise des Systems erfolgt die Informationsausgabe an den Benutzer automatisch, wodurch die Kenntnisnahme der in der Datenbasis hierarchisch als die wichtigste oder die interessanteste eingestufte Information des Ortes, wo sich das System befindet, durch den Benutzer ermöglicht wird. Die Objekte, die in der Datenbasis beschrieben sind, besitzen zur ortsabhängigen Wiedergabe in ihrer Beschreibung ihre genauen Standorte. Zudem sind die Informationen derart gespeichert, daß eine Entscheidung des Zugriffs gemäß dem für die Information gewünschten Genauigkeitsgrad zugelassen wird.

Die Aufgabe der vorliegenden Erfindung besteht darin, ein Verfahren und eine Vorrichtung zum Bereitstellen einer Informationseinheit an einen Benutzer zu schaffen, das eine universellere Einsetzbarkeit und eine effektivere Informationswiedergabeauswahl ermöglicht.

Diese Aufgabe wird durch ein Verfahren gemäß Anspruch 1 und eine Vorrichtung gemäß Anspruch 12 gelöst.

Der vorliegenden Erfindung liegt die Erkenntnis zugrunde, daß ein verbessertes Auswahlverhalten und eine universellere Einsetzbarkeit bei ortsabhängigen Informationswiedergabesystemen erzielt werden kann, wenn das geographische Auswahlkriterium dynamisch eingestellt wird. Erfindungsgemäß wird die Einstellung des geographischen Auswahlkriteriums abhängig von einer erfaßten Art der Bewegung des Benutzers oder einer Position des Benutzers durchgeführt.

Die Heranziehung einer erfaßten Art der Bewegung zur Einstellung des geographischen Auswahlkriteriums trägt dem von den Erfindern entdeckten Umstand Rechnung, daß die Art der Bewegung Rückschlüsse auf eine Situation bzw. Umgebung des Benutzers zuläßt, an welche wiederum das geographische Auswahlkriterium angepaßt werden kann. Mit dem Ausdruck "Art der Bewegung" ist vorliegend jegliche Art und Weise der Bewegung und insbesondere jeglicher Parameter der Bewegung gemeint, die geeignet sind, das Bewegungsverhalten des Benutzers zu beschreiben und Rückschlüsse auf die Umgebung bzw. Situation des Benutzers zulassen. Die Erfassung der Art der Bewegung des Benutzers umfaßt gemäß einem Ausführungsbeispiel der vorliegenden Erfindung die Erfassung von Bewegungsparametern, wie z.B. der geographischen Position, der Geschwindigkeit und der Bewegungsrichtung des Benutzers über einen bestimmten Zeitraum hinweg. Aus den aus dieser Erfassung resultierenden Daten werden statistische Kenngrößen ermittelt, die derart ausgewählt sind, daß sie für vorbestimmte Situationen bzw. Umgebungen charakteristische bzw. unterscheidbare Werte annehmen, so daß aus den statistischen Kenngrößen Rückschlüsse auf die Situation bzw. die Umgebung des Benutzers gezogen werden können. Abhängig von den ermittelten, statistischen Kenngrößen oder der Situation bzw. der Umgebung, auf die rückgeschlossen wurde, wird dann das geographische Auswahlkriterium geeignet eingestellt, wie z.B. eine maximale Entfernung, welches der Ort eines Objekts zu dem Benutzer haben darf, damit die Informationseinheit zu dem Objekt wiedergegeben wird oder in die engere Wahl einbezogen wird.

Die verschiedenen Situationen bzw. Umgebungen des Benutzers, denen durch Einstellung des geographischen Auswahlkriteriums Rechnung getragen werden soll, umfassen bei einem Ausführungsbeispiel der vorliegenden Erfindung beispielsweise solche, wie sie einem Autofahrer während der Fahrt begegnen, wie z.B. das Fahren im Stadtgebiet, das Fahren auf einer Landstraße oder das Fahren auf einer Autobahn. Unterschiedliche Situationen bzw. Umgebungen des Benutzers erfordern unterschiedliche geographische Auswahlkriterien. Beispielsweise mögen für einen Autofahrer Objekte in weiter Entfernung interessant sein, der sich aufgrund von wiedergegebenen Informationen zu diesem Objekt dazu entschließen könnte, dasselbe anzufahren, wobei ohnehin die Informationsdichte entlang von Autobahnen erfahrungsgemäß niedriger ist; demgegenüber können Informationen zu weit entfernt liegenden Objekten für einen im Stadtverkehr befindlichen Autofahrer eher störend sein, da erfahrungsgemäß die Sichtweite im Stadtgebiet äußerst begrenzt ist, die Wahrscheinlichkeit, daß er an diesem Objekt vorbeifährt, äußerst gering ist, und zudem die Aufmerksamkeit des Autofahrers im Stadtverkehr nicht unnötig zusätzlich belastet werden sollte.

Alternativ wird gemäß der vorliegenden Erfindung die Einstellung des geographischen Auswahlkriteriums abhängig von einer erfaßten Position des Benutzers vorgenommen. Die erfaßte Position ist allgemein als jegliche Positionsangabe zu verstehen, die angibt, in welcher Umgebung sich der Benutzer befindet, wie z.B. in einer Stadt, in einer bestimmten Stadt, auf einer Landstraße, einer bestimmte Landstraße oder gar einer bestimmten geographischen Position. Gemäß einem Ausführungsbeispiel der vorliegenden Erfindung wird beispielsweise die geographische Position des Benutzers erfaßt und anhand einer Landkarte oder dergleichen nachgeschlagen, in welcher Art von Umgebung sich der Benutzer befindet, wie z.B. in einem Stadtgebiet, auf einer Landstraße oder einer Autobahn, welchen wiederum Auswahlkriterien zugeordnet sein können, die an diese Umgebungen und die entsprechenden Situationen, in denen sich der Benutzer dort erfahrungsgemäß befindet, angepaßt sind, und auf welche das geographische Auswahlkriterium eingestellt werden kann.

Ein Vorteil der vorliegenden Erfindung besteht folglich darin, daß das erfindungsgemäße Konzept zur ortsabhängigen Informationswiedergabe in Anwendungen eingesetzt werden kann, bei denen der Benutzer in unterschiedliche Umgebungen und Situationen gerät, die wiederum unterschiedliche geographische Auswahlkriterien erforderlich machen. Zudem muß er die Anpassung nicht selbst vornehmen, sondern sie erfolgt automatisch.

Ein weiterer Vorteil der vorliegenden Erfindung besteht darin, daß der Benutzer aufgrund der an die Umgebung und Situation angepaßten Einstellung des geographischen Auswahlparameters nicht mit Informationen zu Objekten "belästigt" wird, deren Wiedergabe in dieser Situation bzw. Umgebung für den Benutzer keinen Sinn machen, was wiederum die Akzeptanz auf dem erfindungsgemäßen Prinzip beruhender Informationssysteme steigern wird.

In dem Fall der Einstellung des geographischen Auswahlkriteriums abhängig von dem Bewegungsverhalten besteht ein weiterer Vorteil darin, daß es möglich ist, dem Umstand Rechnung zu tragen, daß der Benutzer an ein und der selben Umgebung, wie z.B. auf der Autobahn, zu verschiedenen Zeitpunkten verschiedene Situationen erlebt, wie z.B. Stau oder keinen Stau, welche wiederum verschiedene geographische Auswahlkriterien erfordern.

Bevorzugte Ausführungsbeispiele der vorliegenden Erfindung werden nachfolgend Bezug nehmend auf die beiliegenden Zeichnungen näher erläutert. Es zeigen:

Fig. 1     ein schematisches Blockdiagramm eines Informationswiedergabeverfahrens gemäß einem Ausführungsbeispiel der vorliegenden Erfindung, anhand dessen das allgemeine Prinzip der vorliegenden Erfindung erläutert wird;

Fig. 2     ein schematisches Blockdiagramm einer Informationswiedergabevorrichtung gemäß einem Ausführungsbeispiel der vorliegenden Erfindung, bei dem eine Einstellung von geographischen Auswahlkriterien abhängig vom Bewegungsverhalten des Benutzers vorgenommen wird;

Fig. 3     eine schematische Zeichnung, anhand der die einstellbaren geographischen Auswahlkriterien gemäß dem Ausführungsbeispiel von Fig. 2 verdeutlicht werden; und

Fig. 4     eine schematische Darstellung einer Funktion zwischen der mittleren Geschwindigkeit und der maximalen Entfernung als ein Beispiel für eine Funktion zwischen der erfaßten Art einer Bewegung und einem geographischen Auswahlparameter, wie sie bei dem Ausführungsbeispiel von Fig. 2 verwendet wird.

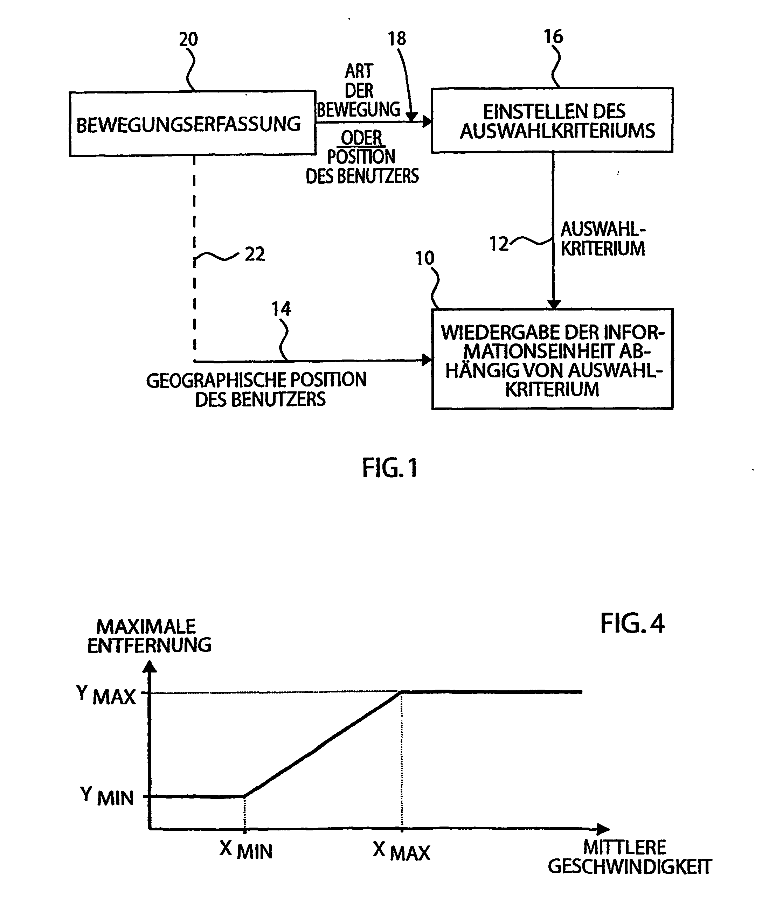

Bezug nehmend auf Fig. 1 wird zunächst allgemein das Prinzip der vorliegenden Erfindung anhand eines Ausführungsbeispiels beschrieben. Obwohl bei der Beschreibung von Fig. 1 auf die einzelnen Funktionsblöcke als die einzelnen Schritte eines Verfahrens Bezug genommen wird, ist die folgende Erörterung ohne weiteres auf eine entsprechende Vorrichtung übertragbar, in welchem Fall die einzelnen Funktionsblöcke von Fig. 1 einzelne Einrichtungen zur Durchführung dieser Funktionen darstellten.

Fig. 1 stellt ein Verfahren zur Bereitstellung bzw. Wiedergabe einer Informationseinheit an einen Benutzer dar, die ein Objekt beschreibt, das sich an einem bestimmten Ort befindet. Wie es aus Fig. 1 ersichtlich ist, findet, wie es bei ähnlichen Systemen üblich ist, die Wiedergabe 10 der Informationseinheit abhängig von einem Auswahlkriterium 12 und einer geographischen Position 14 des Benutzers statt. Die Wiedergabe 10 kann auf jegliche erdenkliche Weise stattfinden, wie z.B. über einen Lautsprecher, einen Fernseher oder solche Vorrichtungen, die andere Sinne des Benutzers ansprechen, wie z.B. Geruchserzeuger, taktile Geräte oder dergleichen. Informationseinheiten umfassen beispielsweise Informationen über geschichtliche Daten, kulturelle Daten, Einkaufsmöglichkeiten oder andere Informationen. Beispiele für Objekte umfassen dementsprechend Denkmäler, Gebäude oder dergleichen. Das Objekt kann aber auch in dem Ort an sich bestehen, wie z.B. wenn ein an das an einem bestimmten Ort stattgefundene geschichtliche Geschehen erinnerndes Denkmal nicht vorhanden ist. Zudem kann der Ort des Objekts auch eine geographische Ausdehnung besitzen, wie z.B. in dem Fall einer Information über ein Naturschutzgebiet oder dergleichen.

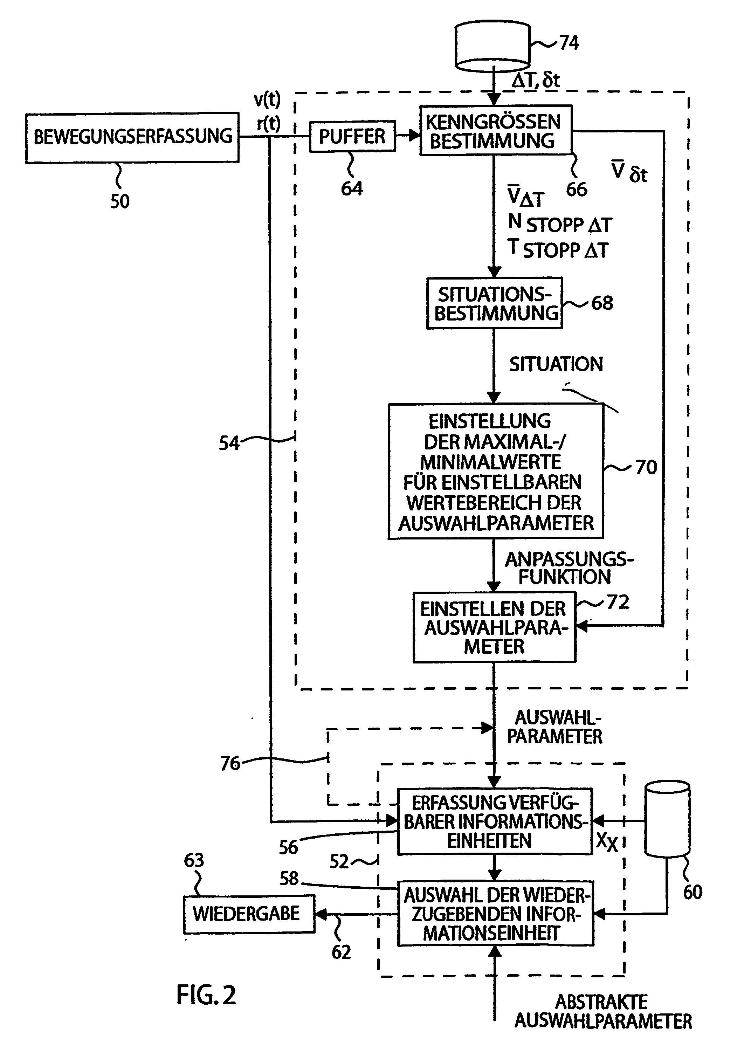

Die geographische Position 14 des Benutzers kann auf jegliche Weise erfaßt worden sein, wie z.B. durch einen GPS-Empfänger oder dergleichen. Die geographische Position 14 weist zu dem Ort der Informationseinheit eine vorbestimmte räumliche Beziehung auf, wie z.B. eine bestimmte Entfernung zu dem Objekt, die wiederum über einen bestimmten funktionellen Zusammenhang bestimmbar ist. Die Wiedergabe 10 der Informationseinheit findet nur dann statt, wenn diese räumliche Beziehung von geographischer Position des Benutzers zu dem Ort des Objekts das geographische Auswahlkriterium 12 erfüllt, wie z.B. die Einhaltung einer maximalen Entfernung zu dem Objekt. Weitere Ausführungsbeispiele für das geographische Auswahlkriterium und die Bestimmung, ob dasselbe erfüllt ist, werden Bezug nehmend auf das folgende Ausführungsbeispiel in den Fig. 2 - 4 beschrieben.

Im Unterschied zu herkömmlichen Informationswiedergabesystemen wird vorliegend das geographische Auswahlkriterium 12 einer laufenden Einstellung 16 unterzogen. Diese Einstellung 16 soll dem Umstand Rechnung tragen, daß für verschiedene Umgebungen bzw. Situationen des Benutzers verschiedene geographische Auswahlkriterien optimal sein können. Vorliegend wird die Einstellung 16 abhängig von einer Art der Bewegung oder der Position des Benutzers (allgemein angezeigt mit 18) durchgeführt, deren Erfassung in einer Bewegungserfassung 20 durchgeführt wird.

Die Einstellung 16 des Auswahlkriteriums 12 umfaßt beispielsweise das Ändern eines Auswahlparameters, der das Auswahlkriterium 12 definiert. Das Auswahlkriterium ist in diesem Fall dann erfüllt, wenn ein aus der geographischen Position 14 des Benutzers und dem Ort des Objekts berechenbarer Wert, der die geographische Beziehung zwischen Objekt und Benutzer beschreibt, wie z.B. die Entfernung zwischen denselben, den geographischen Auswahlparameter unter- oder überschreitet, wie z.B. eine maximale Entfernung unterschreitet. Alternativ könnte die Einstellung 16 auch das Wechseln von einer Auswahlkriteriumsart zu einer anderen umfassen, wie z.B. von der Einhaltung einer maximalen Entfernung zu dem Auswahlkriterium, daß sich das Objekt an einem vorbestimmten Raumwinkel relativ zu der geographischen Position und der Bewegungsrichtung des Benutzers befindet. Ferner könnte die Einstellung 16 auch die Einstellung mehrerer Auswahlparameter umfassen, wie es bei dem bezugnehmend auf die Fig.

2 - 4 beschriebenen Ausführungsbeispiel der Fall ist.

In dem Fall, daß bei der Bewegungserfassung 20 die Art der Bewegung 18 erfaßt wird, umfaßt dieselbe die Erfassung von das Bewegungsverhalten des Benutzers beschreibenden Bewegungsparametern, wie z.B. die geographische Position, die Geschwindigkeit und/oder die Bewegungsrichtung des Benutzers über einen gewissen Zeitraum. Abhängig von diesem zeitlichen Verlauf der Bewegungsparameter wird die Einstellung 16 des geographischen Auswahlkriteriums vorgenommen. Wie es detaillierter bezugnehmend auf das Ausführungsbeispiel von Fig. 2 - 4 beschrieben werden wird, können hierzu beispielsweise aus den das Bewegungsverhalten des Benutzers beschreibenden Bewegungsparametern statistische Kenngrößen berechnet werden, die derart ausgewählt sind, daß sie für vorbestimmte Situationen bzw. Umgebungen des Benutzers charakteristisch sind, wie z.B. für eine Stadt-, Landstraßen- oder Autobahnfahrt. Anhand dieser statistischen Größen kann über einen funktionellen Zusammenhang oder mittels eines Zusammenhangs zwischen den statistischen Kenngrößen und vorbestimmten, ausgewählten Situationen und Umständen einerseits und eine Zuordnung zwischen diesen vorbestimmten Situationen bzw. Umständen und an dieselben optimal angepaßten Auswahlparametern andererseits die Einstellung 16 vorgenommen werden.

In dem Fall der Einstellung 16 abhängig von der Position des Benutzers 18 kann die Positionsangabe von der Bewegungserfassung 20 jedwede Angabe umfassen, wo sich der Benutzer befindet, wie z.B. an einer bestimmten geographischen Position, oder die Angabe, in welcher Umgebung sich der Benutzer befindet, falls diese beispielsweise von einem Ortserfassungsgerät oder einem Handy oder dergleichen bereitgestellt wird. In dem erstgenannten Fall wird die Einstellung 16 durch Nachschlagen in einer geographischen Karte durchgeführt, in welcher bestimmten Gebieten bzw. Regionen vorbestimmte, optimal an diese Regionen angepaßte Auswahlparameter zugeordnet sind. Beispiele für Regionen sind beispielsweise Städte, Landstraßen oder Autobahnen, wobei denselben entsprechend angepaßte geographische Auswahlparametersätze zugeordnet sind (beispielsweise größere maximale Entfernung bei Autobahnregion und kleinere bei Stadtregion). In dem letztgenannten Fall, bei der die Bewegungserfassung 20 direkt die Umgebung des Benutzers ausgibt, wie z.B. die Information, daß sich der Benutzer auf einer Landstraße befindet, erfolgt die Einstellung 16 direkt über das Nachschlagen in einer Nachschlagtabelle, in der jeder Umgebungsart ein optimales geographisches Auswahlkriterium zugeordnet ist.

Bevor bezugnehmend auf die Fig. 2 - 4 ein spezielles Ausführungsbeispiel beschrieben wird, bei der die Einstellung 16 abhängig von der Art der Bewegung 18 durchgeführt wird, wird darauf hingewiesen, daß gemäß einer weiteren Ausführungsform die Einstellung 16 durchaus auch sowohl von der Art der Bewegung als auch von der Position des Benutzers 18 abhängig eingestellt werden kann, wie z.B. indem die Einstellung 16 dann abhängig von der Position des Benutzers durchgeführt wird, wenn das durch die Art der Bewegung beschriebene Bewegungsverhalten des Benutzers keine hinreichende Rückschlüsse auf eine aktuelle Umgebung bzw. Situation zuläßt.

Ferner wird bezugnehmend auf Fig. 1 noch darauf hingewiesen, daß die Bewegungserfassung 20 beispielsweise von derselben Vorrichtung durchgeführt werden kann, die die geographische Position 14 des Benutzers ausgibt, wie z.B. durch einen GPS-Empfänger. Um die Erfassung der Art der Bewegung 18, des Bewegungsverhaltens bzw. des zeitlichen Verlaufs der zu erfassenden Bewegungsparameter aus einer Positionsbestimmungseinrichtung zu ermöglichen, kann zur Bewegungserfassung 20 zusätzlich ein Puffer verwendet werden, der erfaßte Bewegungsparameter für einen gewissen Zeitraum speichert, um sie für die Einstellung 16 des geographischen Auswahlkriteriums bereitzustellen, wie es auch bei dem im folgenden beschriebenen Ausführungsbeispiel der Fall ist. Der Umstand, daß die zur Bewegungserfassung 20 oder Ausgabe der geographischen Position 14 verwendete Vorrichtung ein und dieselbe sein kann, ist in Fig. 1 durch die gestrichelte Linie 22 verdeutlicht worden.

Bezugnehmend auf Fig. 2, 3 und 4 wird im folgenden ein Ausführungsbeispiel für eine ortsabhängige Informationswiedergabe einer aus einer Mehrzahl von Informationseinheiten beschrieben, bei dem die Einstellung der geographischen Auswahlkriterien anhand einer erfaßten Art der Bewegung des Benutzers durchgeführt wird. Anders als bei der Beschreibung von Fig. 1 wird bezugnehmend auf Fig. 2 auf die dort dargestellten Funktionsblöcke als die entsprechenden Funktionen ausführende Einrichtungen einer Informationswidergabevorrichtung Bezug genommen, wobei jedoch eine Übertragung der folgenden Erörterung auf einen entsprechenden Verfahrensablauf mit entsprechenden Verfahrensschritten ohne weiteres möglich ist.

Die in Fig. 2 dargestellte Vorrichtung zur Wiedergabe von Informationen umfaßt eine Bewegungserfassungseinrichtung 50, eine Auswahleinheit 52 und eine Auswahlparametereinstellungseinheit 54. Die Bewegungserfassungseinrichtung 50 ist mit den Einheiten 52 und 54 verbunden, um an dieselben intermittierend aktuelle Messungen bezüglich der Bewegung des Benutzers auszugeben, die den Zeitpunkt der Messung bzw. Erfassung t, die geographische Position des Benutzers $\vec{r}$ zum Erfassungszeitpunkt, die Geschwindigkeit v zum Erfassungszeitpunkt und die Bewegungsrichtung $\vec{v}_0$ zum Zeitpunkt der Erfassung umfassen. Die Auswahlparametereinstellungseinheit 54 verwendet diese Informationen zur Einstellung von Auswahlparametern, die sie an die Auswahleinheit 52 ausgibt. Die Auswahleinheit 52 verwendet wiederum die empfangenen Auswahlparameter zur Auswahl der wiederzugebenden Informationseinheit.

Die Bewegungserfassungseinrichtung 50 ist beispielsweise ein GPS-Empfänger, der intermittierend die geographische Position des Benutzers ausgibt. Geschwindigkeits-, Beschleunigungs- bzw. Richtungsänderungssensoren können in der Bewegungserfassungseinrichtung 50 vorgesehen sein, um die Informationen bezüglich der Geschwindigkeit und der Bewegungsrichtung des Benutzers bereitzustellen. Alternativ kann eine Einrichtung vorgesehen sein, die die Geschwindigkeits- und Richtungsangaben aus zwei oder mehreren aufeinanderfolgenden geographischen Positionsangaben des GPS-Empfängers oder jeglicher anderer Positionserfassungseinrichtung berechnet. In dem Fall, daß aufgrund von Abschattungen des GPS-Signals keine Messung eines bestimmten Bewegungsparameters, wie der Position, der Geschwindigkeit oder der Bewegungsrichtung, länger als eine bestimmte Höchstzeitdauer geliefert werden kann, werden entsprechende Daten beispielsweise aus alten oder den jeweils anderen Daten extrapoliert bzw. berechnet.

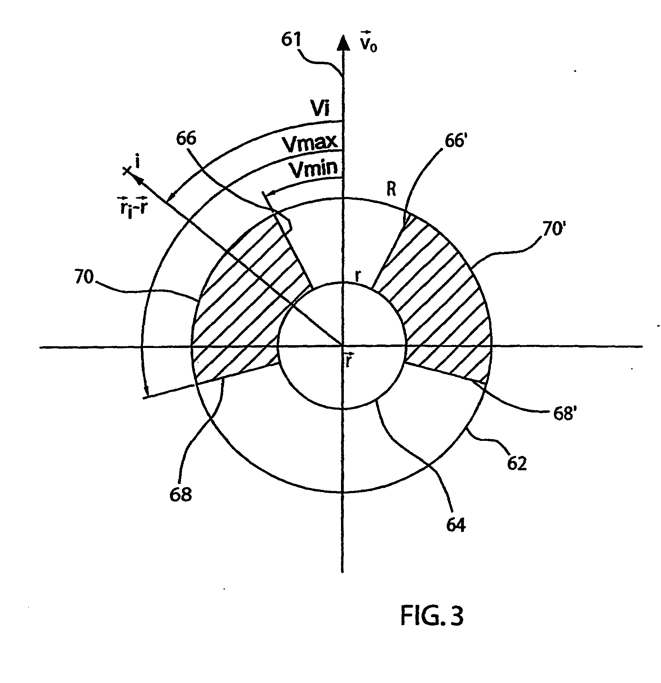

Die Auswahleinheit 52 umfaßt eine Einrichtung zur Erfassung verfügbarer Informationseinheiten 56 zur Durchführung einer ersten Auswahlstufe nach geographischen Kriterien sowie eine Einrichtung 58 zur Auswahl der wiederzugebenden Informationseinheit aus der Mehrzahl verfügbarer Informationseinheiten zur Durchführung einer zweiten Auswahlstufe nach abstrakten Auswahlkriterien. Die Einrichtung 56 empfängt und verwendet die von der Bewegungserfassungseinrichtung 50 bereitgestellte Information bezüglich der aktuellen geographischen Position $\vec{r}$ und Bewegungsrichtung $\vec{v}_0$ des Benutzers. Von der Auswahlparametereinstellungseinheit 54 empfängt die Einrichtung 56 die momentan eingestellten Auswahlparameter, die bezugnehmend auf Fig. 3 näher erläutert werden. Von einem Speicher 60, der beispielsweise einen Arbeitsspeicher, eine Festplatte, einen Magnetspeicher und/oder eine CD-ROM umfaßt, empfängt und verwendet die Einrichtung 56 Informationen betreffend die Orte $\vec{r}_i$ aller Objekte, die durch die in dem Speicher 60 gespeicherten Informationseinheiten i beschrieben werden.

An dieser Stelle wird darauf hingewiesen, daß zur Vereinfachung der vorliegenden Beschreibung die Informationseinheiten sowie die Orte $\vec{r}_i$ der von ihnen beschriebenen Objekte als in einem einzigen Speicher 60 gespeichert dargestellt sind, obwohl vorzugsweise die eigentlichen informationsenthaltenden Daten, wie z.B. Bilddaten, Tondaten oder dergleichen, in einem anderen Speicher oder auf andere Art und Weise bereitgestellt werden als die Orte $\vec{r}_i$ der durch sie beschriebenen Objekte, wie z.B. über Internet. Vorzugsweise besteht jede Informationseinheit aus einem Verwaltungsteil, der neben dem Ort des durch die Informationseinheit beschriebenen Objekts weitere die Informationseinheit beschreibende Informationen enthält und vorzugsweise während des Betriebs in einem schnellen Speicher, wie z.B. einem RAM, gespeichert ist, sowie einem die eigentlichen Informationen zu dem Objekt enthaltenden Teil, der beispielsweise auf einer CD gespeichert oder auf einer Internetseite abrufbar ist, und auf welchen der Verwaltungsteil einen Verweis, wie z.B. ein Verzeichnispfad oder eine Internetadresse, enthält.

Die Einrichtung 56 zur Erfassung verfügbarer Informationseinheiten geht die Liste aller Informationseinheiten, d.h. alle i, durch, um diejenigen Informationseinheiten festzustellen, die Objekte beschreiben, deren Orte $\vec{r}_i$ zu der geographischen Position des Benutzers eine derartige räumliche Beziehung aufweisen, daß das Auswahlkriterium erfüllt wird, wie es durch die geographischen Auswahlparameter von der Auswahlparametereinstellungseinheit 54 definiert wird.

Um den Auswahlvorgang der Einrichtung 56 näher zu erläutern, wird vorübergehend auf Fig. 3 Bezug genommen, in der anhand einer Skizze die Auswahlparameter veranschaulicht werden, die das bzw. die Auswahlkriterien definieren, das bzw. die schließlich zur Entscheidung verwendet werden, ob der Ort eines Objekts relativ zu dem Benutzer eine derartige räumliche Beziehung aufweist, daß das Auswahlkriterium erfüllt wird. Fig. 3 zeigt mit einem Pfeil 61 den Bewegungsrichtungsvektor $\vec{v}_0$ an, wie er von der Bewegungserfassungseinrichtung 50 erhalten wird. Der Bewegungsrichtungsvektor 61 fußt an einem Punkt, der der geographischen Position $\vec{r}$ des Benutzers entspricht, wie sie von der Bewegungserfassungseinrichtung 50 erhalten wird. In Fig. 3 sind außerdem zwei konzentrisch um den Ort $\vec{r}$ angeordnete Kreise 62 und 64 dargestellt, die einen Radius von R bzw. r aufweisen. Ferner sind spiegelsymmetrisch zu der Bewegungsrichtung 61 zwei radial vom Punkt $\vec{r}$ ausgehende Linien gezeigt, die mit der Bewegungsrichtung 61 einen Winkel $\theta_{min}$ einschließen, sowie zwei radiale, symmetrische Linien 68, 68', die mit der Bewegungsrichtung 61 einen Winkel $\theta_{max}$ einschließen. Durch die Linien 66, 68 und die Kreislinien 62 und 64 wird ein schraffierter Bereich 70 definiert, der bezüglich der Bewegungsrichtung 61 spiegelsymmetrisch zu einem Bereich 70' ist, der durch die Linien 66', 68' und die Kreislinien 62 und 64 eingeschlossen wird.

Die von der Auswahlparametereinstellungseinheit 54 an die Einrichtung 56 ausgegebenen Auswahlparameter, die die Einrichtung 56 zur Auswahl als erste Stufe in dem Auswahlprozeß der Auswahleinheit 52 verwendet, sind

die maximale Entfernung R,
die minimale Entfernung r,
die untere Öffnungswinkelgrenze $\theta_{min}$ und
die obere Öffnungswinkelgrenze $\theta_{max}$.

Ein Objekt i mit der geographischen Position $\vec{r}_i$ und einem relativen Öffnungswinkel $\theta_i$ zu der geographischen Position des Benutzers $\vec{r}$ erfüllt die durch die oben aufgelisteten Auswahlparameter definierten Auswahlkriterien deshalb nur, wenn folgende Ungleichungen

$$|\vec{r}_i - \vec{r}| < R,$$

$$|\vec{r}_i - \vec{r}| > r,$$

$$|\theta_i| > \theta_{min}$$

und

$$|\theta_i| < \theta_{max}$$

erfüllt sind (wobei $\theta_i \in \{-\pi; \pi\}$).

Alle Orte, die alle Auswahlkriterien erfüllen, sind in den schraffierten Bereichen 70 und 71 angeordnet.

Zurückkehrend zu Fig. 2 gibt die Einrichtung 56 folglich als erste Stufe des Auswahlprozesses der Auswahleinheit 52 zur Auswahl der wiederzugebenden Informationseinheit an die Einrichtung 58 die Information aus, welche Informationseinheiten i Objekte beschreiben, die sich an Orten befinden, die relativ zu der geographischen Position des Benutzers und seiner Bewegungsrichtung alle durch die Auswahlparameter von der Einheit 54 definierten Auswahlkriterien erfüllen, d.h. an Orten in den Bereichen 70 oder 71 angeordnet sind (Fig. 3).

An die durch die Einrichtung 56 implementierte erste Stufe des Auswahlprozesses der Auswahleinheit 52, die auf geographische Auswahlkriterien gerichtet ist, schließt sich eine zweite Stufe des Auswahlprozesses an, die durch die Einrichtung 58 durchgeführt wird und auf abstrakten Auswahlkriterien beruht. Die zweite Stufe des Auswahlprozesses ist vorgesehen, um aus den gegebenenfalls mehreren Informationseinheiten, die die geographischen Auswahlkriterien erfüllten, keine willkürliche Auswahl, sondern eine an den Geschmack des Benutzers angepaßte Auswahl, zu treffen. Die Einrichtung 58 erhält hierzu ferner weitere Informationen bezüglich der von der Einrichtung 56 angegebenen Informationseinheiten aus den in dem Speicher 58 gespeicherten Verwaltungsteilen, wie z.B. eine Kategorieangabe, wie z.B. Geschichte, Geographie usw., eine Wichtigkeitsangabe oder dergleichen. Ferner erhält die Einrichtung 58 die abstrakten Auswahlkriterien festlegenden abstrakten Auswahlparameter, wie z.B. Auswahlparameter, die eine Hierarchie bezüglich der existierenden Kategorien festlegen, um dem Geschmack und den Vorlieben des Benutzers bei der Auswahl aus den die geographischen Auswahlkriterien erfüllenden Informationseinheiten Rechnung zu tragen, und dergleichen. In dem Fall, daß nach Anwendung der geographischen Auswahlkriterien durch die Einrichtung 56 und die Anwendung der abstrakten Auswahlkriterien durch die Einrichtung 58 mehr als eine Informationseinheit all diese Kriterien erfüllt, wählt die Einrichtung 58 willkürlich oder nach anderen Kriterien, wie z.B. dem kürzesten Abstand des durch die Informationseinheit beschriebenen Objekts zu dem Benutzer, eine Informationseinheit aus, die wiedergegeben werden soll, und gibt ein Signal, das diese Informationseinheit anzeigt, an einem Ausgang 62 an eine Wiedergabeeinrichtung 63 aus, wie z.B. einen Lautsprecher, einen Kopfhörer oder anderer sinnesansprechende Vorrichtungen.

Wie im vorhergehenden beschrieben worden ist, muß eine Informationseinheit, um die erste Stufe des Auswahlprozesses zu passieren, die geographischen Auswahlkriterien erfüllen, wie sie bezugnehmend auf Fig. 3 erläutert wurden. Die in Fig. 3 dargestellten schraffierten Bereiche 70 und 71, die die Orte darstellen, die diese geographischen Auswahlkriterien erfüllen, sind aber beispielsweise nicht für jede Autofahrersituation im gleichen Maße gut geeignet. Wie es zu sehen ist, beträgt der maximale Öffnungswinkel $\theta_{max}$ in dem Fall von Fig. 3 über 90°. Eine solche Einstellung wäre im Stadtverkehr ein zu großer Wert, da es dem Autofahrer aufgrund der erhöhten Aufmerksamkeit, die er dem Verkehr schenken muß, nicht zugemutet werden kann, über Objekte hinter sich informiert und dadurch abgelenkt zu werden.

Um die augenblicklich eingestellten geographischen Auswahlparameter einstellen bzw. umstellen zu können, ist die Auswahlparametereinstellungseinheit 54 vorgesehen, die im folgenden beschrieben wird. Die Einheit 54 umfaßt einen mit dem Ausgang der Bewegungserfassungseinrichtung 50 verbundenen Puffer 64, eine Kenngrößenbestimmungseinrichtung 66, eine Situationsbestimmungseinrichtung 68, eine Grobeinstellungseinrichtung 70 und eine Feineinstellungseinrichtung 72, die alle in Reihe zwischen die Bewegungserfassungseinrichtung 50 und die Auswahleinheit 52 geschaltet sind.

Der Puffer 64 empfängt zunächst die intermittierend von der Bewegungserfassungseinrichtung 50 ausgegebenen Bewegungsparametermessungen $\vec{r}$(t) und $\vec{v}$(t) zum Zeitpunkt t. Diese Größen werden in dem Puffer 64 auf eine FIFO- (first-in-first-out = zuerst hinein zuerst hinaus) Weise gespeichert, um Daten über das Bewegungsverhalten des Benutzers über einen gewissen Zeitraum hinweg bereitzustellen, der im wesentlichen durch die Größe des Puffers bzw. die Speicherkapazität und die mittlere Meßabstandszeitdauer zwischen aufeinanderfolgenden Messungen definiert ist sowie auch durch die Genauigkeit der Meßwerte und das Speicherformat. Veranschaulichend liegen die Maßdaten in folgender Form in dem Puffer 64 vor:

$$... \{t_{i-1}, \vec{r}(t_{i-1}), \vec{v}(t_{i-1})\}, \{t_i, \vec{r}(t_i), \vec{v}(t_i)\}, \{t_{i+1}, \vec{r}(t_{i+1}), \vec{v}(t_{i+1})\} ...$$

wobei i ein Index ist, der einer Position innerhalb des Puffers entspricht.

Auf den Speicherinhalt des Puffers 64 hat die Kenngrößenbestimmungseinheit 66 Zugriff, um aus den dort bereitgestellten Daten anhand vorgegebener Berechnungsfunktionen statistische Kenngrößen zu berechnen. Diese statistischen Größen bestimmt die Einrichtung 66 basierend auf den Bewegungsparametermessungen in dem Puffer 64 für zwei unterschiedliche Zeitdauern $\Delta t$ und $\delta t$, deren Werte dieselbe von einem Speicher 74 erhält. Die in dem Speicher 74 gespeicherten Zeitwerte $\Delta t$ und $\delta t$ bestimmen folglich die Zeitlängen von Zeitfenstern, bezüglich derer die Einrichtung 66 statistische Kenngrößen berechnet. Die statistischen Kenngrößen, die sich auf das längere Zeitfenster $\Delta t$ beziehen, stellen Langzeitcharakteristika des Verhaltens des Benutzers dar und werden, wie es im folgenden erörtert werden wird, von der Situationsbestimmungseinrichtung 68 verwendet, um eine Situation des Benutzers zu bestimmen. Die bezüglich des kürzeren Zeitfensters $\delta t$ berechneten, statistischen Kenngrößen stellen Kurzzeitcharakteristika des Fahrverhaltens des Benutzers dar und werden von der Feineinstellungseinrichtung 72 verwendet, wie es im folgenden näher erörtert werden wird.

Als eine erste statistische Kenngröße ermittelt die Einrichtung 66 die Durchschnittsgeschwindigkeit bezüglich der Zeitfenster $\Delta t$ und $\delta t$ aus den in diesen Fenstern enthaltenen Bewegungsparametermessungen, die in dem Puffer 64 gespeichert sind. Die Durchschnittsgeschwindigkeit $\vec{v}$ berechnet sich zu:

$$\overline{v} = \frac{v_1 + v_2 + v_3 + ... + v_n}{n} \left[\frac{m}{s}\right],$$

wobei

$$v_i = \left[\frac{m}{s}\right]$$

die Geschwindigkeitsmessungen in dem Puffer 64 sind, die in dem entsprechenden Zeitfenster $\Delta t$ bzw. $\delta t$ enthalten sind, der Index i die Position innerhalb des Puffers angibt, und n die Anzahl aller Messungen ist, die in diesem Zeitfenster enthalten sind.

Ein zweite statistische Größe ist die Anzahl von Stopps innerhalb eines Zeitfensters, d.h. die Anzahl von Malen, bei denen die Geschwindigkeit auf Null gegangen ist ($N_{Stopp}$).

Als weitere statistische Kenngröße ermittelt die Einrichtung 66 den zeitlichen Anteil, den ein Benutzer stand, relativ zu einem gegebenen Zeitfenster. Dieser Zeitanteil T berechnet sich zu

$$\overline{T} = \frac{T_1 + T_2 + T_3 + ... + T_n}{T_w} \, [\%],$$

wobei $T_i$ [s] die Zeitintervalle zwischen zwei Bewegungsparametermessungen der Bewegungserfassungseinrichtung 50, d.h. $T_i = t_i - t_{i-1}$ (unter Verwendung der obigen Notation zur Veranschaulichung der Pufferspeicherung) und $T_w$ [s] entweder $\Delta t$ oder $\delta t$ ist, d.h. die Länge des Zeitfensters.

Als die das Lenkverhalten des Benutzers charakterisierende statistische Kenngröße ermittelt die Einrichtung 66 einen Durchschnittsabsolutbetragdrehwinkel $\overline{A}$. Die Berechnung kann auf zwei verschiedene Weisen durchgeführt werden. Nach der ersten berechnet sich $\overline{A}$ zu

$$\overline{A} = \frac{\dfrac{A_1}{T_1} + \dfrac{A_2}{T_2} + .... + \dfrac{A_n}{T_n}}{n} \cdot T_w \, [°],$$

wobei $T_i$ [s] die Zeitintervalle zwischen zwei aufeinanderfolgenden Bewegungsparametererfassungen sind, $T_w$ [s] die Zeitdauer des gegebenen Zeitfensters ist, d.h. $\Delta t$ oder $\delta t$, $A_i$ [°] die Richtungsdifferenz zwischen zwei aufeinanderfolgenden Bewegungsparametermessungen bzw. der Winkel zwischen zwei aufeinanderfolgenden Bewegungsmessungen $\vec{v}(t_i)$ und $\vec{v}(t_{i-1})$ ist, und n die Anzahl aller Positionsdaten in dem jeweiligen Zeitfenster anzeigt.

Das auf die zweite Weise berechnete $\bar{A}$ berechnet sich zu

$$\bar{A} = \frac{\dfrac{A_1}{T_1} + \dfrac{A_2}{T_2} + \ldots + \dfrac{A_n}{T_n}}{n} \left[\frac{°}{s}\right],$$

wobei $T_i$ [s] die Zeitintervalle zwischen zwei aufeinanderfolgenden Bewegungsparametermessungen, $A_i$ [°] das Richtungsdifferenzintervall zwischen zwei aufeinanderfolgenden Bewegungsparametermessungen und n die Anzahl aller Positionsdaten ist, die in dem jeweiligen Zeitfenster erfaßt werden.

Ein einzelner Summand in dem Zähler der letztgenannten, das Lenkverhalten des Benutzers charakterisierenden Kenngrößen $\bar{A}$ ist um so größer, je größer der Richtungsunterschied aufeinanderfolgender Bewegungsparametermessungen und je kleiner das dazwischenliegende Zeitintervall ist, was wiederum ein Maß für die Lenkintensität bzw. die Lenkstärke ist. Weitere berechenbare Kenngrößen könnten durch die Einrichtung 66 ebenfalls ermittelt werden.

Die berechneten, statistischen Kenngrößen bezüglich des längeren Zeitfensters $\Delta t$ gibt die Einrichtung 66 an die Situationsbestimmungseinrichtung 68 aus. Die Situationsbestimmungseinrichtung verwendet heuristisch bestimmte Grenzwerte, um anhand der statistischen Kenngrößen von der Einrichtung 66 festzustellen, in welcher Situation sich der Benutzer augenblicklich befindet. Hierzu sind in der Nachschlagtabelle (nicht gezeigt) für jede voreingestellte Situation, wie z.B. Stadtfahrt, Landstraßenfahrt, Autobahnfahrt, Grenzwerte gespeichert, die festlegen, welche Werte die Kenngrößen aufweisen müssen, damit auf die entsprechende Situation erkannt wird. Folglich ist in der Nachschlagtabelle zu jeder voreingestellten Situation ein Wertebereich für jede verwendete, statistische Kenngröße, die dieselbe von der Einrichtung 66 empfängt, enthalten.

Gemäß einem Ausführungsbeispiel verwendet die Situationsbestimmungseinrichtung 68 zur Bestimmung der vorliegenden Situation, in welcher sich der Benutzer befindet, drei statistische Kenngrößen, nämlich die Durchschnittsgeschwindigkeit, die Anzahl von Stopps und den zeitlichen Anteil der Stopps $\bar{T}$ in dem Zeitfenster $\Delta t$. Entsprechend den exemplarisch voreingestellten drei Situationen "Stadt", "Landstraße" und "Autobahn" sind den jeweiligen statistischen Kenngrößen jeweils drei Wertebereiche zugeordnet:

eine Fahrsituation "Stadt" liegt vor, falls

$$0 \leq \bar{v} \leq 35 \left[\frac{km}{h}\right];$$

$$3 \leq N_{Stopp};$$

$$10\% \leq \bar{T};$$

eine Fahrsituation "Landstraße" liegt vor, falls

$$35 \leq \bar{v} \leq 80 \left[\frac{km}{h}\right];$$

$$0 \leq N_{Stopp} \leq 3;$$

$$0\% \leq \bar{T} \leq 10\%$$

eine Fahrsituation "Autobahn" liegt vor, falls

$$80 \leq \bar{v} \left[ \frac{km}{h} \right];$$

$$N_{Stopp} = 0;$$

$$\bar{T} = 0\%$$

Ohne weiteres können der Nachschlagtabelle der Situationsbestimmungseinrichtung 68 weitere Situationen hinzugefügt werden. Es wird darauf hingewiesen, daß es vorteilhaft ist, wenn die die voreingestellten Situationen charakterisierenden Wertebereiche bezüglich der statistischen Kenngrößen für die einzelnen voreingestellten Situationen derart ausgewählt sind, daß sie eine eindeutige Bestimmung einer der voreingestellten Situationen basierend auf den statistischen Kenngrößen ermöglichen bzw. eine eindeutige Zuordnung zwischen Kenngrößensatz und voreingestellter Situation ergeben. Andernfalls müssen geeignete Regeln aufgestellt werden, welche von zwei oder mehreren möglichen, voreingestellten Situationen durch die Bestimmungseinrichtung 68 auszuwählen ist.

Die Situationsbestimmungseinrichtung 68 kann ohne weiteres abgeändert werden, um die Auswahl der voreingestellten Situationen aus weiteren statistischen Kenngrößen zu bestimmen. Ebenso können weitere voreingestellte Situationen hinzugefügt werden, wie z.B. "Stau" oder dergleichen. Jeder neuen voreingestellten Situation werden hierbei Grenzwerte zugeordnet, die den Wertebereich bezüglich jeder statistischen Kenngröße, die von der Einrichtung 68 verwendet wird, definieren, wobei diese in der Nachschlagtabelle abgespeichert werden.

Nachdem die Situationsbestimmungseinrichtung 68 die Situation bzw. die Umgebung des Benutzers anhand der statistischen Kenngrößen ermittelt hat, gibt dieselbe die Information hierüber an die Grobeinstellungseinrichtung 70 weiter, die anhand dieser Information in derselben Nachschlagtabelle wie derjenigen der Einrichtung 68 oder in einer getrennten Nachschlagtabelle (nicht gezeigt) nachschlägt, um Werte zu erhalten, die Minimal- und Maximalwerte für die Feineinstellung durch die Feineinstellungseinrichtung 72 definieren sowie einen funktionellen Zusammenhang zwischen statistischen Kurzzeitkenngrößen, die durch die Kenngrößenbestimmungseinrichtung 66 bestimmt worden sind, und den geographischen Auswahlparametern festlegen, wie es im folgenden bezugnehmend auf Fig. 4 erläutert werden wird.

Genauer ausgedrückt, legen die durch die Grobeinstellungseinrichtung 70 nachgeschlagenen Werte Funktionen eines speziellen Typs fest, die einen funktionellen Zusammenhang zwischen einer bezüglich des kurzen Zeitfensters ermittelten, statistischen Kenngröße und einem geographischen Auswahlparameter festlegen. Jede Funktion $f(x)$ ist aufgrund ihres Funktionstyps durch vier Werte $x_{min}$, $x_{max}$, $y_{min}$ und $y_{max}$ eindeutig definiert und besteht aus drei angrenzenden Abschnitten, nämlich zwei konstanten Funktionsabschnitten und einem dazwischenliegenden, linear ansteigenden oder fallenden Funktionsabschnitt. Genauer ausgedrückt ist jede Funktion $f(x)$ durch folgende Gleichung definiert:

$$f(x) = \begin{cases} y_{min} & x \leq x_{min} \\ y_{min} + \dfrac{(y_{max} - y_{min}) \cdot (x - x_{min})}{x_{max} - x_{min}} & x_{min} \leq x \leq x_{max} \\ y_{max} & x_{max} \leq x \end{cases}$$

Die obige Gleichung gilt für eine Funktion des ansteigenden Typs, wie sie exemplarisch in Fig. 4 für den Zusammenhang zwischen der mittleren Geschwindigkeit und der maximalen Entfernung gezeigt ist. Die Funktionsgleichung für eine entsprechende fallende Funktion berechnet sich aus den durch die Einrichtung 70 nachgeschlagenen Werten wie folgt:

$$f(x) = \begin{cases} y_{max} & x \leq x_{min} \\ y_{max} + \dfrac{(y_{max} - y_{min}) \cdot (x - x_{min})}{x_{max} - x_{min}} & x_{min} \leq x \leq x_{max} \\ y_{min} & x_{max} \leq x \end{cases}$$

wobei bei den obigen Formeln f(x) = y dem geographischen Auswahlparameter entspricht und x der über das kleine Zeitintervall $\delta t$ ermittelten statistischen Kenngröße entspricht, wie sie die Feinbestimmungseinrichtung 72 von der Kenngrößenbestimmungseinrichtung 66 erhält.

In der Nachschlagtabelle der Einrichtung 70 ist für jeden geographischen Auswahlparameter genau einen Satz von Werten gespeichert, der eine Funktion festlegt, die einen funktionellen Zusammenhang zwischen einer statistischen Kenngröße ermittelt aus einem kurzen Zeitfenster $\delta t$ und dem jeweiligen geographischen Auswahlparameter festlegt. Natürlich könnten auch andere funktionelle Zusammenhänge bzw. andere Funktionen verwendet werden, die von mehr als einer statistischen Kenngröße abhängen. Eine der in Fig. 4 gezeigten Funktion entsprechende, von zwei statistischen Kenngrößen x1 und x2 abhängige Funktion F(x1, x2) könnte beispielsweise durch sechs Werte $x1_{min}$, $x2_{min}$, $x1_{max}$, $x2_{max}$, $y_{min}$ und $y_{max}$ festgelegt sein.

Anhand von Fig. 4 wird exemplarisch anhand der maximalen Entfernung als einem Beispiel für einen geographischen Auswahlparameter der Zweck der Grobeinstellung durch die Grobeinstellungseinrichtung 70 sowie das Zusammenspiel mit der Feineinstellung durch die Feineinstellungseinrichtung 72 erläutert.

Zur Feineinstellung der maximalen Entfernung (in Fig. 3 als R bezeichnet) wird die mittlere Geschwindigkeit während des Zeitfensters $\delta t$ herangezogen. Dementsprechend legt die Grobeinstellungseinrichtung 70 eine Funktion zwischen diesen beiden Größen fest, wie sie in Fig. 4 gezeigt ist, in der entlang der x-Achse die mittlere Geschwindigkeit und entlang der y-Achse die maximale Entfernung aufgetragen ist. Die Festlegung der Funktion von Fig. 4 geschieht durch die von der Einrichtung 70 nachgeschlagenen Werte $x_{min}$, $x_{max}$, $y_{min}$ und $y_{max}$. Die in Fig. 4 dargestellt Funktion stellt somit die Anpassungsfunktion dar, anhand der die Feineinstellungseinrichtung 72 die Feineinstellung der maximalen Entfernung vornimmt, indem sie die von der Kenngrößenbestimmungseinrichtung erhaltene mittlere Geschwindigkeit in die obige Formel für ansteigende Funktionen als Funktionswert x einsetzt und dabei die nachgeschlagenen Werte $x_{min}$, $x_{max}$, $y_{min}$ und $y_{max}$ verwendet.

Wie es zu sehen ist, ist die Funktion derart ausgewählt, daß durch sie die Feineinstellung durch die Feineinstellungseinrichtung 72 auf einen Bereich [$x_{min}$, $x_{max}$] einerseits und einen Wertebereich [$y_{min}$; $y_{max}$] andererseits eingeschränkt wird. Anders ausgedrückt, geht der Definitionsbereich der Funktion bzw. Feineinstellungsfunktion zwar von minus Unendlich bis plus Unendlich, aber der Funktionswert, auf den die Feineinstellung den entsprechenden geographischen Auswahlparameter einschränkt ist außerhalb des Bereiches [$x_{min}$, $x_{max}$] konstant. Diese Einschränkungen sind wiederum für jede vordefinierte Situation unterschiedlich. Beispielsweise sollte die maximale Entfernung R (Fig. 3) bei der Situation "Stadt" nicht zu groß sein, so daß es hier einen Maximalwert $y_{max}$ für seine Anpassung bei der Feineinstellung gibt. Dieser Maximalwert wird kleiner sein als für den Fall "Autobahn". Zusätzlich existiert ein Maximalwert $x_{max}$ bezüglich der mittleren Geschwindigkeit, bis zu der eine Anpassung bei der Feineinstellung vorgenommen wird. Der Grund hierfür ist, daß eine große Geschwindigkeit bei der Situation "Stadt" eine spezielle Ausnahmesituation bedeutet und in diesem Fall die maximale Entfernung R nicht so weit angepaßt werden sollte.

Exemplarische Werte für $x_{min}$, $x_{max}$, $y_{min}$ und $y_{max}$ für den funktionellen Zusammenhang zwischen der maximalen Entfernung und der mittleren Geschwindigkeit $\bar{v}$ für die exemplarischen Situationen "Stadt", "Landstraße" und "Autobahn" sind:

Tabelle 1

|  | $x_{min}$ [km/h] | $x_{max}$ [km/h] | $y_{min}$ [m] | $y_{max}$ [m] |
|---|---|---|---|---|
| Stadt | 0 | 50 | 100 | 300 |
| Landstraße | 20 | 100 | 300 | 1.000 |
| Autobahn | 60 | 200 | 1.500 | 4.000 |

Die Grobeinstellungseinrichtung 70 gibt die Anpassungsfunktion definiert durch den Satz der nachgeschlagenen Werte $x_{min}$, $x_{max}$, $y_{min}$ und $y_{max}$ an die Feineinstellungseinrichtung 72 weiter, die darüber hinaus von der Kenngrößenbestimmungseinrichtung 66 diejenigen statistischen Kenngrößen bezüglich des kurzen Zeitfensters erhält, bezüglich derer die Anpassungsfunktionen der einzelnen geographischen Auswahlparameter definiert sind, wie z.B. im Fall von Fig. 4 die bezüglich des kurzen Zeitfensters $\delta t$ ermittelte mittlere Geschwindigkeit $\bar{v}_{\delta t}$. Beispiele für weitere Paare eines Auswahlparameters und einer statistischen Kenngröße für einen funktionellen Zusammenhang umfassen beispielsweise das Paar von minimalem Abstand $r$ und mittlerer Geschwindigkeit $\bar{v}_{\delta t}$, das Paar $\theta_{min}$ und $\bar{T}[°/s]$ und das Paar $\theta_{max}$ und $\bar{T}[°/s]$. Anhand der jeweiligen Anpassungsfunktion ermittelt die Feineinstellungseinrichtung 72 jeden geographischen Auswahlparameter als Funktionswert dieser Funktion an der entsprechenden Ordinate bzw. dem Wert der entsprechenden statistischen Kenngröße. Liegt die mittlere Geschwindigkeit bei dem exemplarischen Beispiel von Fig. 4 beispielsweise zwischen $x_{min}$ und $x_{max}$, wie sie durch die durch die Einrichtung 68 bestimmte Situation durch die Einrichtung 70 nachgeschlagen wurden, stellt die Feineinstellungseinrichtung 72 die maximale Entfernung auf den entsprechenden Funktionswert zwischen $y_{min}$ und $y_{max}$ ein, die ebenfalls von der durch die Situationsbestimmungseinrichtung 68 ermittelten Situation abhängen und durch die Grobeinstellungseinrichtung 70 in einer Nachschlagtabelle nachgeschlagen wurden (vergleiche hierzu obige Tabelle).

Die Einstellungseinrichtung 72 gibt schließlich die nach dem funktionellen Zusammenhang ermittelten geographischen Auswahlparameter an die Auswahleinheit 52 aus, die wiederum, wie es im vorhergehenden beschrieben worden ist, anhand dieser Parameter die erste Stufe des Auswahlprozesses bezüglich der Informationseinheiten durchführt.

Aufgrund der durch die Auswahlparametereinstellungseinheit 54 durchgeführten fahrverhaltensabhängige Einstellung der geographischen Auswahlparameter ist sichergestellt, daß die geographischen Auswahlparameter immer an die Situation bzw. Umgebung des Benutzers angepaßt sind und der Auswahlprozeß der Auswahleinheit 52 somit eine möglichst sinnvolle Auswahl trifft. Falls beispielsweise der Benutzer langsam fährt, kann angenommen werden, daß seine physische Situation oder sein physischer Kontext Hindernisse bildet, die es ihm nicht erlauben, schneller zu fahren, und in diesem Fall sind für ihn nur nahegelegene Objekte relevant. In dem Fall, da ein Benutzer entlang einer Autobahn fährt, ist für ihn ein Objekt in einer nahegelegenen Stadt (1 km) relevant, da er sich entscheiden könnte, sie zu besuchen. Dann verläßt er die Autobahn und fährt in die Stadt, wobei sich die Fahrtgeschwindigkeit verringert. Wenn er sich in der Stadt befindet, sind für ihn lediglich Objekte innerhalb geringer Entfernung relevant und er sollte nicht über Objekte informiert werden, die weit weg gelegen sind (z.B. 5 km).

Aus diesem Fallbeispiel werden zwei Schlußfolgerungen deutlich, denen durch die oben beschriebene Funktionsweise der Auswahlparametereinstellungseinheit 54 Rechnung getragen worden ist. Einerseits läßt sich am Fahrverhalten des Benutzers erkennen, in welcher Situation bzw. Umgebung sich der Benutzer befindet (langsames Fahren in einer Stadt, schnelleres auf der Autobahn). Dieser Erkenntnis wird durch die Einrichtungen 66 und 68 Rechnung getragen, die zusammen anhand der von der Bewegungserfassungseinrichtung 50 gelieferten Informationen bestimmen, welche Situation vorliegt.

Eine zweite Schlußfolgerung ist, daß den Benutzer in verschiedenen Situationen bzw. Umgebungen Objekte interessieren, die je nach Situation bzw. Umgebung verschieden weit entfernt sind (weiter entfernt liegende auf der Autobahn, nähergelegene in der Stadt). Dieser Erkenntnis wird durch die Einrichtungen 70 und 72 Rechnung getragen, die zusammen die Einstellung der Auswahlparameter vornehmen.

Eine gestrichelte Linie 76 in Fig. 2, die von der Einrichtung 56 zur Erfassung verfügbarer Informationseinheiten anhand der Auswahlparameter ausgehend eine Rückkopplungsschleife bildet, soll anzeigen, daß es vorgesehen sein kann, daß für den Fall, daß die Auswahlparameter zu scharfe Auswahlkriterien festlegen und somit nur wenige oder gar keine Informationseinheiten die geographischen Auswahlkriterien erfüllen, die von der Auswahlparametereinstellungseinheit 54 eingestellten geographischen Auswahlparameter stufenweise geändert werden können, um die durch dieselben definierten geographischen Auswahlkriterien stufenweise zu entschärfen bzw. zu lockern. Bildlich gesprochen wird hierdurch der schraffierte Bereich in Fig. 3 (70, 70') stufenweise vergrößert, um die Menge der Informationseinheiten, die die erste Stufe des Auswahlprozesses der Auswahleinheit 52 passieren, zu erhöhen. Eine Grenze für diese stufenweise Lockerung der geographischen Auswahlkriterien könnte beispielsweise durch die oberen Grenzwerte der Wertebereiche bzw. $y_{max}$, wie sie bezugnehmend auf Fig. 4 beschrieben worden sind, gebildet sein. Auf diese Weise wird eine weitere Anpassung der geographischen Auswahlparameter vorgenommen, und zwar an die Verteilung der durch die existierenden Informationseinheiten beschriebenen Objekte bzw. die Verteilung aller $\vec{r}_i$. Ist die Verteilung in der Umgebung der geographischen Position des Benutzers zu gering, so werden die Auswahlparameter stufenweise verändert, um die geographischen Auswahlkriterien zu lockern.

Bezugnehmend auf das Ausführungsbeispiel von Fig. 2 wird noch auf folgendes hingewiesen. Bezüglich der Bestimmung der das mittlere Bewegungsverhalten des Benutzers beschreibenden Bewegungskenngrößen könnten mehr als nur die beschriebenen zwei Zeitfenster mit unterschiedlichen Zeitdauern $\Delta t$ und $\delta t$ verwendet werden, wie z. B. drei Zeitfenster, eines für einen kurzen, eines für einen mittleren und eines für einen langen Zeitbereich. Während die längeren Zeitbereiche geeigneter sind, um die Situation bzw. Umgebung des Benutzers zu bestimmen, wie es durch die Situationsbestimmungseinrichtung 68 durchgeführt wird, sind die kürzeren Zeitfenster geeigneter für die Feineinstellung durch die Feineinstellungseinrichtung 72, um in einem durch die Grobeinstellung vorgegebenen Rahmen augenblicklichen Fahrtmanövern Rechnung zu tragen.

Ferner könnten die Grenzen $y_{min}$ und $y_{max}$ (Fig. 4) der geographischen Auswahlparameter anstatt in Abhängigkeit von dem zuvor abgeleiteten Zonentyp bzw. der zuvor abgeleiteten Situation anhand einer Nachschlagtabelle auch durch kontinuierliche Funktionen berechnet werden, ohne daß eine Situation wirklich bestimmt wird.

Eine konkrete Möglichkeit des Einsatzes der Vorrichtung von Fig. 2 ist, wie im vorhergehenden schon angedeutet, z.B. ein mobiles Informationssystem, das einem Autofahrer während der Fahrt ausgewählte Informationen über umliegende Objekte wiedergibt. Durch GPS bestimmt das System den aktuellen Standort sowie die Bewegungsrichtung und die Geschwindigkeit des Benutzers. Das System selektiert eine Informationseinheit bezüglich eines Objekts, wenn der Ort des Objekts vorgegebene, geographische Auswahlkriterien erfüllt, die durch die geographischen Auswahlparameter festgelegt sind.

Durch den durch die Auswahlparametereinstellungseinheit 54 implementierten Adaptionsalgorithmus, wie er im vorhergehenden beschrieben worden ist, werden diese geographischen Auswahlkriterien bzw. deren entsprechende Auswahlparameter nun dynamisch an den physikalischen Kontext bzw. die Situation oder Umgebung des Benutzers angepaßt. Wie bezugnehmend auf Fig. 4 beschrieben, besteht eine mögliche Adaption eines Auswahlkriteriums beispielsweise in der Änderung der maximal zulässigen Entfernung eines Objekts in Abhängigkeit von der mittleren Geschwindigkeit des Benutzers. Fährt der Benutzer schneller, so wird der Auswahlbereich erweitert, um auch weiter entfernt liegende Informationseinheiten auswählen zu können. Hierzu wird eine Adaptionsfunktion (Fig. 4) verwendet, die einen definierten Wertebereich zwischen einem Minimal- und Maximalwert ($y_{min}$, $y_{max}$) aufweist. Die Grenzwerte werden zuvor durch die Auswertung anderer Kenngrößen und auch anderer Zeitfenster durch die Grobeinstellungseinrichtung 70 bestimmt oder berechnet.

Neben den bezugnehmend auf die Kenngrößenbestimmungseinrichtung 66 beschriebenen Kenngrößen könnten ferner statistische Abweichungen, wie z.B. Standardabweichung oder Varianz, innerhalb des betrachteten Zeitfensters der von der Bewegungserfassungseinrichtung 50 erfaßten Bewegungsparameter als statistische Kenngrößen verwendet werden.

Hinsichtlich der Implementierung der Vorrichtung von Fig. 2 wird darauf hingewiesen, daß dieselbe sowohl in Software, Hardware als auch gemischt, in Firmware, realisiert sein kann. Hinsichtlich der Auswahlparameterbestimmungseinheit 54 und der Auswahleinheit 52 wird darauf hingewiesen, daß dieselben unabhängig voneinander arbeiten, um Verarbeitungen iterativ zu wiederholen, wie z.B. zu jedem Zeitpunkt, da eine neue Bewegungsparametermessung von der Bewegungserfassungseinrichtung 50 ausgegeben wird. Die Iteration der beiden Einheiten ist jedoch unabhängig voneinander, und dieselben könnten beispielsweise als unabhängige Softwareteilprogramme ausgeführt sein. Die Auswahleinheit greift dann auf die jeweils aktuell eingestellten Auswahlparameter über beispielsweise speziell vorgesehene gemeinsame Register zu, in der die Auswahlparametereinheit intermittierend geänderte Auswahlparameter einträgt. Auch die Einrichtungen innerhalb der Auswahlparametereinstellungseinheit 54 können unterschiedliche Iterationszyklen aufweisen. Die Feineinstellungseinrichtung 73 kann beispielsweise eine schnellere Iterationsfrequenz aufweisen als dies für den Teil bis zur Grobeinstellungseinrichtung 70 der Fall ist.

Abschließend wird bezugnehmend auf Fig. 2 noch darauf hingewiesen, daß die Unterteilung in eine Grob- und Feineinstellung lediglich ein spezielles Ausführungsbeispiel darstellt und daß aus den statistischen Kenngrößen ferner direkt über funktionelle Zusammenhänge die geographischen Auswahlparameter eingestellt werden könnten.

Das obige Ausführungsbeispiel von Fig. 2 schafft folglich einen Algorithmus für die dynamische Autoadaption eines Systems zur standortabhängigen Wiedergabe von Informationen passend zum physikalischen Kontext des Benutzers. Das System verwendet mehrere Auswahlkriterien, um auszuwählen, welche Information vorrangig wiedergegeben werden soll. Zudem ändert das System automatisch die geographischen Auswahlkriterien des Systems in Abhängigkeit von der physikalischen Umgebung und vom Verhalten des Benutzers. Die physikalische Umgebung beinhaltet Informationen über die Verteilung der verfügbaren Informationseinheiten als auch über den Typ der geographischen Zone, in der der Benutzer sich bewegt. Der Adaptionsalgorithmus wertet das Bewegungsverhalten des Benutzers aus, um die geographische Zone abzuleiten und die geographischen Auswahlparameter entsprechend zu ändern.

Anders ausgedrückt ermöglicht somit das obige Ausführungsbeispiel die dynamische Adaption der geographischen Auswahlparameter eines Informationssystems zur physikalischen Umgebung des Benutzers, der sich dynamisch bewegt. Der Algorithmus wertet unter anderem die sich dynamisch verändernden Benutzerstandorte aus und entscheidet entsprechend, welche Werte für die geographischen Auswahlparameter augenblicklich für die aktuelle Benutzersituation am geeignetsten sind.

Der Algorithmus wertet eine Positionsangabe aus, welche durch eine externe Quelle erfaßt wird. Diese Positionsangaben beinhalten den aktuellen Standort des Benutzers, eine Angabe zur Bewegungsrichtung und Geschwindigkeit. Durch die zeitliche passende Auswertung der Positionsangaben berechnet der Algorithmus mehrere Kenngrößen, die das mittlere Bewegungsverhalten des Benutzers beschreiben. Die Bewegungskenngrößen werden für mehrere Zeitfenster berechnet. Die Anzahl und Dauer der Zeitfenster sind beliebig. Anschließend wertet der Algorithmus die Bewegungskenngrößen pro Zeitfenster aus, um die aktuell gültigen minimal/maximal zulässigen Grenzen für alle benötigten Auswahlparameter zu berechnen. Durch diese Auswertung kann z.B. auch ein geographischer Zonentyp (im vorhergehenden als Situation bezeichnet) abgeleitet werden, in dem sich der Benutzer augenblicklich bewegt. Die Grenzen der Auswahlparameter können dabei in Abhängigkeit von dem zuvor abgeleiteten Zonentyp festgelegt werden oder auch durch kontinuierliche Funktionen berechnet werden.

Nach der Festlegung der minimalen und maximalen Grenzen für jeden Auswahlparameter bestimmt der Algorithmus die tatsächlichen Werte der geographischen Auswahlparameter durch eine detailliertere Auswertung der Bewegungskenngrößen, wobei der Wertebereich für die Einstellung der geographischen Auswahlparameter durch zuvor berechnete minimale/maximale Grenzen eingeschränkt wird.

Zuletzt wertet der Algorithmus außerdem die Anzahl und Dichteverteilung der um den Benutzer herum zur Verfügung stehenden Informationseinheiten aus und verfeinert, falls erforderlich, anschließend nochmals die Auswahlparameter.

Der Vorteil dieses durch die Vorrichtung von Fig. 2 implementierten Algorithmus besteht folglich darin, daß derselbe dynamisch und automatisch den geographischen Auswahlprozeß des Informationssystems passend zur geographischen Umgebung und zum Verhalten des Benutzers adaptiert. Die Selektion von Informationen hängt nicht nur von den Standorten des Benutzers und der verfügbaren Informationseinheiten ab, sondern auch von Bewegungsfreiheiten des Benutzers und der Verteilung der Informationseinheiten. Die Auswahlparameter, die das Auswahlverhalten des Informationssystems festlegen, werden dynamisch jederzeit so adaptiert, daß das Auswahlverhalten des Systems möglichst optimal an die aktuelle geographische Situation und das Verhalten des Benutzers angepaßt ist.

**Patentansprüche**

1. Verfahren zum Bereitstellen einer unter einer Mehrzahl zur Verfügung stehender Informationseinheiten an einen Benutzer, wobei die Informationseinheiten jeweils ein Objekt an einem jeweiligen Ort beschreiben, wobei das Verfahren folgende Schritte aufweist:

   a) Erfassen (20; 50) einer geographischen Position des Benutzers;

   b) iteratives Ermitteln (56) solcher Informationseinheiten aus der Mehrzahl von zur Verfügung stehenden Informationseinheiten, die Objekte beschreiben, die sich an Orten befinden, die zu der geographischen Position des Benutzers eine räumliche Beziehung aufweisen, die ein geographisches Auswahlkriterium erfüllt, Auswählen einer an den Benutzer widerzugebenden Informationseinheit unter den ermittelten Informationseinheiten, und Wiedergeben (10; 63) der ausgewählten Informationseinheit an den Benutzer;

   c) abhängig von einem zeitlichen Verlauf der geographischen Position, einer Geschwindigkeit und/oder einer Bewegungsrichtung des Benutzers, Einstellen (16; 70, 72) des geographischen Auswahlkriteriums, so daß ein nachfolgender Auswahlvorgang mit einem unterschiedlichen geographischen Auswahlkriterium durchgeführt werden,
   wobei das Verfahren ferner folgenden Schritt aufweist:

   d) vor dem Schritt c), Erfassen (20; 50) der Position, der Geschwindigkeit und/oder der Bewegungsrichtung des Benutzers über ein Zeitfenster vorbestimmter Dauer hinweg, um den zeitlichen Verlauf zu erfassen,

   wobei Schritt b) das Auswählen derjeniger Informationseinheiten umfaßt, die Objekte an Orten beschreiben, die so gelegen sind, daß eine Entfernung der geographischen Position des Benutzers von dem Ort des Objekts oder ein Winkel ($\theta_i$) zwischen der Bewegungsrichtung ($\vec{v}_0$) des Benutzers und einer Linie, die durch die geographische Position des Benutzers und den Ort des Objekts führt, einen Auswahlparameter (R, r) über- oder unterschreitet, wobei Schritt b) ferner folgende Teilschritte aufweist:

   b1) Auswertung (68) des erfaßten zeitlichen Verlaufs in dem Zeitfenster vorbestimmter Zeitdauer ($\delta t$), um eine statistische Kenngröße zu erhalten; und

   b2) Einstellen (70, 72) des geographischen Auswahlkriteriums abhängig von der statistischen Kenngröße, und

   wobei bei Schritt d) der zeitliche Verlauf auch über ein weiteres Zeitfenster einer weiteren vorbestimmten Zeitdauer bestimmt wird, die länger als die Zeitdauer des vorbestimmten Zeitfensters ist, und der Schritt b) ferner folgende Teilschritte aufweist:

   vor dem Schritt b2),

Auswertung (68) des erfaßten zeitlichen Verlaufs in dem weiteren Zeitfenster, um eine weitere statistische Kenngröße zu erhalten, die ein weiteres Maß für Änderungen im zeitlichen Verlauf ist,

Rückschließen (68) auf eine Situation des Benutzers aus einer Mehrzahl von vorbestimmten Situationen basierend auf der weiteren statistischen Kenngröße, wobei jeder Situation ein oder mehrere Werte zugeordnet sind, die einen funktionellen Zusammenhang zwischen dem Auswahlparameter und der statistischen Kenngröße definieren;

wobei die Einstellung von Schritt b2) das Einstellen des Auswahlparameters abhängig von der statistischen Kenngröße auf der Basis des durch den oder die der Situation zugeordneten Werts bzw. Werte definierten funktionellen Zusammenhang aufweist.

2. Verfahren gemäß Anspruch 1, bei dem der Schritt c) das Berechnen der Geschwindigkeit bzw. der Bewegungsrichtung aus aufeinanderfolgend erfaßten geographischen Positionen des Benutzers aufweist.

3. Verfahren gemäß Anspruch 1 oder 2, bei dem die der Situation zugeordneten Werte einen Auswahlparameter-Minimalwert ($y_{min}$) und einen Auswahlparameter-Maximalwert ($y_{max}$) sowie einen Kenngrößen-Minimalwert und einen Kenngrößen-Maximalwert umfassen, und der funktionelle Zusammenhang eine Funktion ist, die von 0 bis zum Kenngrößen-Minimalwert den Auswahlparameter-Minimalwert annimmt, vom Kenngrößen-Minimalwert bis zum Kenngrößen-Maximalwert linear zwischen dem Auswahlparameter-Minimalwert und dem Auswahlparameter-Maximalwert verläuft und vom Kenngrößen-Maximalwert an den Auswahlparameter-Maximalwert annimmt.

4. Verfahren gemäß einem der Ansprüche 1 bis 3, bei dem die Auswertung des erfaßten zeitlichen Verlaufs in dem weiteren Zeitfenster derart durchgeführt wird, daß die weitere statistische Kenngröße aus einer Gruppe ausgewählt ist, die die mittlere Geschwindigkeit ($\bar{v}_{\Delta t}$), eine statistische Abweichung der Geschwindigkeit, die mittlere Stärke von Richtungswechseln ($\bar{A}$), die Häufigkeit von Richtungswechseln, die Häufigkeit von Bewegungsstillständen ($N_{Stopp}$) sowie die mittlere Länge von Bewegungsstillständen ($\bar{T}$) umfaßt.

5. Verfahren gemäß einem der Ansprüche 1 bis 4, bei dem die Auswertung des erfaßten zeitlichen Verlaufs in dem Zeitfenster derart durchgeführt wird, daß die statistische Kenngröße die mittlere Geschwindigkeit ($\bar{v}_{\delta t}$) umfaßt.

6. Verfahren gemäß einem der Ansprüche 1 bis 5, das ferner folgende Schritte aufweist:

nach dem Schritt b),

Feststellen (56), wie viele der Informationseinheiten ein Objekt beschreiben, deren Ort zu der geographischen Position des Benutzers derart angeordnet ist, daß das geographische Auswahlkriterium erfüllt ist; und

Lockern (76) des Auswahlkriteriums durch Erhöhen oder Verringern des Auswahlparameters, falls die festgestellte Anzahl einen vorbestimmten Wert unterschreitet.

7. Vorrichtung zum Bereitstellen einer unter einer Mehrzahl zur Verfügung stehender Informationseinheiten an einen Benutzer, wobei die Informationseinheiten jeweils ein Objekt an einem jeweiligen Ort beschreiben, wobei die Vorrichtung folgende Merkmale aufweist:

a) eine Einrichtung zum Erfassen (20; 50) einer geographischen Position des Benutzers;

b) eine Einrichtung zum iteratives Ermitteln solcher Informationseinheiten aus der Mehrzahl von zur Verfügung stehenden Informationseinheiten, die Objekte beschreiben, die sich an Orten befinden, die zu der geographischen Position des Benutzers eine räumliche Beziehung aufweisen, die ein geographisches Auswahlkriterium erfüllt, Auswählen einer an den Benutzer widerzugebenden Informationseinheit unter den ermittelten Informationseinheiten, und Wiedergeben (10; 63) der ausgewählten Informationseinheit an den Benutzer;

c) eine Einrichtung zum, abhängig von einem zeitlichen Verlauf der geographischen Position, einer Geschwindigkeit und/oder einer Bewegungsrichtung des Benutzers, Einstellen (16; 70, 72) des geographischen Auswahlkriteriums, so daß aufeinanderfolgende Auswahlvorgänge mit unterschiedlichen geographischen Auswahlkriterien durchgeführt werden,

wobei die Einrichtung zum Erfassen ausgebildet ist, um die Position, die Geschwindigkeit und/oder die Bewegungsrichtung des Benutzers über ein Zeitfenster vorbestimmter Dauer hinweg zu erfassen, um den zeitlichen Verlauf zu erfassen,

wobei die Einrichtung zum iteratives Ermitteln, Auswählen und Wiedergeben derart ausgebildet ist, dass die Auswahl das Auswählen derjeniger Informationseinheiten umfaßt, die Objekte an Orten beschreiben, die so gelegen sind, daß das eine Entfernung der geographischen Position des Benutzers von dem Ort des Objekts oder ein Winkel ($\theta_i$) zwischen der Bewegungsrichtung ($\vec{v}_0$) des Benutzers und einer Linie, die durch die geographische Position des Benutzers und den Ort des Objekts führt, einen Auswahlparameter (R, r) über- oder unterschreitet, wobei die Vorrichtung ferner folgende Merkmale aufweist:

b1) eine Einrichtung zum Auswerten (68) des erfaßten zeitlichen Verlaufs in dem Zeitfenster vorbestimmter Zeitdauer ($\delta t$), um eine statistische Kenngröße zu erhalten; und

b2) eine Einrichtung zum Einstellen (70, 72) des geographischen Auswahlkriteriums abhängig von der statistischen Kenngröße, und

wobei die Einrichtung zum Erfassen ferner ausgebildet ist, um den zeitliche Verlauf auch über ein weiteres Zeitfenster einer weiteren vorbestimmten Zeitdauer zu bestimmen, die länger als die Zeitdauer des vorbestimmten Zeitfensters ist, und die Einrichtung zum iterativen Ermitteln, Auswählen und Wiedergeben folgende Einrichtungen aufweist:

eine Einrichtung zum Auswerten (68) des erfaßten zeitlichen Verlaufs in dem weiteren Zeitfenster, um eine weitere statistische Kenngröße zu erhalten, die ein weiteres Maß für Änderungen im zeitlichen Verlauf ist,

eine Einrichtung zum Rückschließen (68) auf eine Situation des Benutzers aus einer Mehrzahl von vorbestimmten Situationen basierend auf der weiteren statistischen Kenngröße, wobei jeder Situation ein oder mehrere Werte zugeordnet sind, die einen funktionellen Zusammenhang zwischen dem Auswahlparameter und der statistischen Kenngröße definieren;

wobei die Einrichtung zum Einstellen (70, 72) des geographischen Auswahlkriteriums abhängig von der statistischen Kenngröße ausgebildet ist, um das Einstellen des Auswahlparameters abhängig von der statistischen Kenngröße auf der Basis des durch den oder die der Situation zugeordneten Werts bzw. Werte definierten funktionellen Zusammenhangs durchzuführen.

## Claims

1. Method for providing one of a plurality of available information units to a user, wherein the information units each describe an object at a respective location, wherein the method comprises:

   a) detecting (20; 50) a geographic position of the user;

   b) iteratively determining (56) such information units from the plurality of available information units that describe objects situated at locations which have a spatial relationship to the geographic position of the user which meets a geographic selection criterion, selecting an information unit to be reproduced to the user from the determined information units, and reproducing (10; 63) the selected information unit to the user;

   c) depending on a temporal behavior of the geographic position, a speed and/or a direction of movement of the user, adjusting (16; 70, 72) the geographic selection criterion so that a subsequent selection process is performed with a different geographic selection criterion,
   the method further comprising:

   d) prior to step c), detecting (20; 50) the position, speed and/or direction of movement of the user over a time window of predetermined duration to detect the temporal behavior,

   wherein step b) includes selecting those information units that describe objects at locations situated so that a distance of the geographic position of the user from the location of the object or an angle ($\theta_i$) between the direction of movement ($\vec{v}_0$) of the user and a line running through the geographic position of the user and the location of the object is below or exceeds a selection parameter (R, r),
   wherein step b) further comprises the following substeps:

b1) evaluation (68) of the detected temporal behavior in the time window of a predetermined time period ($\delta t$) to obtain a statistical characteristic or measure; and

b2) adjusting (70, 72) of the geographic selection criterion depending on the statistical characteristic, and

wherein in step d) the temporal behavior is also determined over a further time window of a further predetermined time period which is longer than the time period of the predetermined time window, and wherein step b) further comprises the following substeps:

prior to step b2),
evaluation (68) of the detected temporal behavior in the further time window to obtain a further statistical characteristic which is a further measure for changes in the temporal behavior,
concluding (68) a situation of the user from a plurality of predetermined situations based on the further statistical characteristic, wherein one or more values defining a functional connection between the selection parameter and the statistical characteristic are associated with each situation;

wherein the adjustment of step b2) comprises adjusting the selection parameter depending on the statistical characteristic on the basis of the functional connection defined by the value and/or values associated with the situation.

2. Method according to claim 1, wherein step c) comprises calculating the speed and/or direction of movement from successively detected geographic positions of the user.

3. Method according to claims 1 or 2, wherein the values associated with the situation include a selection parameter minimum value ($y_{min}$) and a selection parameter maximum value ($y_{max}$) as well as a characteristic minimum value and a characteristic maximum value, and the functional connection is a function which, from 0 to the characteristic minimum value, adopts the selection parameter minimum value, from the characteristic minimum value to the characteristic maximum value, runs linearly between the selection parameter minimum value and the selection parameter maximum value, and from the characteristic maximum value, adopts the selection parameter maximum value.

4. Method according to one of claims 1 to 3, wherein the evaluation of the detected temporal behavior in the further time window is performed such that the further statistical characteristic is selected from a group including the average speed ($\bar{v}_{\Delta t}$), a statistical variation of the speed, the average degree of changes in direction ($\bar{A}$), the frequency of changes in direction, the frequency of movement stops ($N_{stop}$) as well as the average duration of movement stops ($\bar{T}$).

5. Method according to one of claims 1 to 4, wherein the evaluation of the detected temporal behavior in the time window is performed such that the statistical characteristic includes the average speed ($\bar{v}_{\delta t}$).

6. Method according to one of claims 1 to 5, further comprising:

after step b),
determining (56) how many of the information units describe an object whose location is located such with respect to the geographic position of the user that the geographic selection criterion is met; and
relaxing (76) the selection criterion by increasing or reducing the selection parameter, if the determined number is below a predetermined value.

7. Device for providing one of a plurality of available information units to a user, wherein the information units each describe an object at a respective location, wherein the device comprises:

a) a unit for detecting (20; 50) a geographic position of the user;

b) a unit for iteratively determining such information units from the plurality of available information units that describe objects situated at locations which have a spatial relationship to the geographic position of the user which meets a geographic selection criterion, selecting an information unit to be reproduced to the user from the determined information units, and reproducing (10; 63) the selected information unit to the user;

c) a unit for adjusting (16; 70, 72) the geographic selection criterion depending on a temporal behavior of the geographic position, a speed and/or a direction of movement of the user, so that successive selection processes are performed with different geographic selection criteria,

wherein the unit for detecting is configured to detect the position, speed and/or direction of movement of the user over a time window of predetermined duration to detect the temporal behavior,
wherein the unit for iteratively determining, selecting and reproducing is configured such that the step of selecting includes selecting those information units that describe objects at locations situated so that a distance of the geographic position of the user from the location of the object or an angle ($\theta_i$) between the direction of movement ($\vec{v}_0$) of the user and a line running through the geographic position of the user and the location of the object is below or exceeds a selection parameter (R, r),
wherein the device further comprises:

b1) a unit for evaluating (68) the detected temporal behavior in the time window of a predetermined time period ($\delta t$) to obtain a statistical characteristic or measure; and

b2) a unit for adjusting (70, 72) the geographic selection criterion depending on the statistical characteristic, and wherein the unit for detecting further is configured to determine the temporal behavior also over a further time window of a further predetermined time period which is longer than the time period of the predetermined time window, and wherein the unit for iteratively determining, selecting and reproducing comprises the following units:

a unit for evaluating (68) the detected temporal behavior in the further time window to obtain a further statistical characteristic which is a further measure for changes in the temporal behavior,

a unit for concluding (68) a situation of the user from a plurality of predetermined situations based on the further statistical characteristic,

wherein one or more values defining a functional connection between the selection parameter and the statistical characteristic are associated with each situation;

wherein the unit for adjusting (70, 72) the geographic selection criterion depending on the statistical characteristic is configured to perform the adjustment of the selection parameter depending on the statistical characteristic on the basis of the functional connection defined by the value and/or values associated with the situation.

## Revendications

1.  Procédé pour la mise à disposition de l'une parmi une pluralité d'unités d'information disponibles pour un utilisateur, les unités d'information décrivant, chacune; un objet à un endroit respectif, le procédé présentant les étapes suivantes :

    a) détecter (20 ; 50) une position géographique de l'utilisateur ;
    b) déterminer de manière itérative (56) de telles unités d'information parmi la pluralité d'unités d'information disponibles qui décrivent des objets qui se trouvent à des endroits présentant, par rapport à la position géographique de l'utilisateur, un rapport spatial qui remplit un critère de sélection géographique, sélectionner une unité d'information à reproduire pour l'utilisateur parmi les unités d'information déterminées, et reproduire (10, 63) l'unité d'information sélectionnée pour l'utilisateur ;
    c) en fonction d'une évolution dans le temps de la position géographique, d'une vitesse et/ou d'une direction de mouvement de l'utilisateur, régler (16 ; 70, 72) le critère de sélection géographique de sorte qu'une opération de sélection suivante soit effectuée avec un critère de sélection géographique différent,
        le procédé présentant, par ailleurs, l'étape suivante :
    d) avant l'étape c), détecter (20 ; 50) la position, la vitesse et/ou la direction de mouvement de l'utilisateur sur une fenêtre de temps d'une durée déterminée, pour détecter l'évolution dans le temps,
        l'étape b) comportant la sélection des unités d'information qui décrivent des objets à des endroits qui sont situés de sorte qu'une distance de la position géographique de l'utilisateur par rapport à l'endroit de l'objet ou un angle ($\theta_i$) entre la direction du mouvement ($\vec{v}_0$) de l'utilisateur et une ligne qui passe par la position géographique de l'utilisateur et l'endroit de l'objet excède ou descend au-dessous d'un paramètre de sélection (R, r),

l'étape b) présentant, par ailleurs, les étapes partielles suivantes :

b1) évaluer (68) l'évolution dans le temps détectée dans la fenêtre de temps de durée prédéterminée (δt), pour obtenir une grandeur caractéristique statistique ; et

b2) régler (70, 72) le critère de sélection géographique en fonction de la grandeur caractéristique statistique, et

à l'étape d), l'évolution dans le temps étant également déterminée sur une autre fenêtre de temps d'une autre durée prédéterminée qui est plus longue que la durée de la fenêtre de temps prédéterminée, et l'étape b) présentant, par ailleurs, les étapes partielles suivantes :

avant l'étape b2),

évaluer (68) l'évolution dans le temps détectée dans l'autre fenêtre de temps, pour obtenir une autre grandeur caractéristique statistique qui est une autre mesure de variations de l'évolution dans le temps,

conclure (68) une situation de l'utilisateur parmi une pluralité de situations prédéterminées sur base de l'autre grandeur caractéristique statistique, à chaque situation étant associées une ou plusieurs valeurs qui définissent un rapport fonctionnel entre le paramètre de sélection et la grandeur caractéristique statistique ;

le réglage de l'étape b2) présentant le réglage du paramètre de sélection en fonction de la grandeur caractéristique statistique sur base du rapport fonctionnel défini par la ou les valeurs associées à la situation.

2. Procédé selon la revendication 1, dans lequel l'étape c) présente le calcul de la vitesse ou de la direction de mouvement à partir de positions géographiques de l'utilisateur détectées successivement.

3. Procédé selon la revendication 1 ou 2, dans lequel les valeurs associées à la situation comprennent une valeur minimale de paramètre de sélection ($y_{min}$) et une valeur maximale de paramètre de sélection ($y_{max}$) ainsi qu'une valeur minimale de grandeur caractéristique et une valeur maximale de grandeur caractéristique, et le rapport fonctionnel est une fonction qui, de 0 à la valeur minimale de grandeur caractéristique, adopte la valeur minimale de paramètre de sélection, de la valeur minimale de grandeur caractéristique à la valeur maximale de grandeur caractéristique, varie de manière linéaire entre la valeur minimale de paramètre de sélection et la valeur maximale de paramètre de sélection et adopte, à partir de la valeur maximale de grandeur caractéristique, la valeur maximale de paramètre de sélection.

4. Procédé selon l'une des revendications 1 à 3, dans lequel l'évaluation de l'évolution dans le temps détectée dans l'autre fenêtre de temps s'effectue de sorte que l'autre grandeur caractéristique statistique soit sélectionnée parmi un groupe comprenant la vitesse moyenne ($\bar{v}_{\delta t}$), une déviation statistique de la vitesse, l'intensité moyenne de changements de direction (a), la fréquence de changements de direction, la fréquence d'arrêts de mouvement ($N_{Stopp}$) ainsi que la longueur moyenne d'arrêts de mouvement ($\bar{T}$).

5. Procédé selon l'une des revendications 1 à 4, dans lequel l'évaluation de l'évolution dans le temps détectée dans la fenêtre de temps s'effectue de sorte que la grandeur caractéristique statistique comprend la vitesse moyenne ($\bar{v}_{\delta t}$).

6. Procédé selon l'une des revendications 1 à 5, présentant, par ailleurs, les étapes suivantes :

après l'étape b),

constater (56) le nombre d'unités d'information qui décrivent un objet dont le lieu est disposé par rapport à la position géographique de l'utilisateur de sorte que le critère de sélection géographique soit rempli ; et

assouplir (76) le critère de sélection en augmentant ou en diminuant le paramètre de sélection, si le nombre déterminé tombe au-dessous d'une valeur prédéterminée.

7. Dispositif pour la mise à disposition de l'une parmi une pluralité d'unités d'information disponibles pour un utilisateur, les unités d'information décrivant, chacune, un objet à un endroit respectif, le dispositif présentant les caractéristiques suivantes :

a) un dispositif destiné à détecter (20 ; 50) une position géographique de l'utilisateur ;

b) un dispositif destiné à déterminer de manière itérative de telles unités d'information parmi la pluralité d'unités d'information disponibles qui décrivent des objets qui se trouvent à des endroits présentant par rapport à la position géographique d'utilisateur un rapport spatial qui remplit un critère de sélection géographique, à sélectionner une unité d'information à reproduire pour l'utilisateur parmi les unités d'information déterminées, et à reproduire (10 ; 63) l'unité d'information sélectionnée pour l'utilisateur ;

c) un dispositif destiné à régler (16 ; 70, 72), en fonction d'une évolution dans le temps de la position géographique, d'une vitesse et/ou d'une direction du mouvement de l'utilisateur, le critère de sélection géographique de sorte que des opérations de sélection successives s'effectuent avec des critères de sélection géographiques différents,

le dispositif destiné à détecter étant réalisé pour détecter la position, la vitesse et/ou la direction de mouvement de l'utilisateur sur une fenêtre de temps de durée prédéterminée, pour détecter l'évolution dans le temps,

le dispositif destiné à déterminer de manière itérative, sélectionner et reproduire est réalisé de sorte que la sélection comporte la sélection des unités d'information qui décrivent des objets à des endroits qui sont situés de sorte qu'une distance de la position géographique de l'utilisateur par rapport à l'endroit de l'objet ou un angle ($\theta_i$) entre la direction de mouvement ($\bar{v}_o$) de l'utilisateur et une ligne qui passe par la position géographique de l'utilisateur et le lieu de l'objet excède ou descend au-dessous d'un paramètre de sélection (R, r),

le dispositif présentant, par ailleurs, les caractéristiques suivantes :

b1) un dispositif destiné à évaluer (68) l'évolution dans le temps détectée dans la fenêtre de temps d'une durée prédéterminée ($\delta t$), pour obtenir une grandeur caractéristique statistique ; et

b2) un dispositif destiné à régler (70, 72) le critère de sélection géographique en fonction de la grandeur caractéristique statistique, et

le dispositif destiné à détecter étant, par ailleurs, réalisé de manière à déterminer l'évolution dans le temps également sur une autre fenêtre de temps d'une autre durée prédéterminée qui est plus longue que la durée de la fenêtre de temps prédéterminée, et le dispositif destiné à déterminer de manière itérative, sélectionner et reproduire présentant les dispositifs suivants :

un dispositif destiné à évaluer (68) l'évolution dans le temps détectée dans l'autre fenêtre de temps, pour obtenir une autre grandeur caractéristique statistique qui est une autre mesure des variations de l'évolution dans le temps,

un dispositif destiné à conclure (68) une situation de l'utilisateur parmi une pluralité de situations prédéterminées sur base de l'autre grandeur caractéristique statistique, à chaque situation étant associées une ou plusieurs valeurs qui définissent un rapport fonctionnel entre le paramètre de sélection et la grandeur caractéristique statistique ;

le dispositif destiné à régler (70, 72) le critère de sélection géographique en fonction de la grandeur caractéristique statistique étant réalisé de manière à effectuer le réglage du paramètre de sélection en fonction de la grandeur caractéristique statistique sur base du rapport fonctionnel défini par la ou les valeurs associées à la situation.

20

18

16

ART
DER
BEWEGUNG

| BEWEGUNGSERFASSUNG | | EINSTELLEN DES AUSWAHLKRITERIUMS |

ODER
POSITION
DES BENUTZERS

AUSWAHL-
KRITERIUM

22

12

10

14

GEOGRAPHISCHE POSITION
DES BENUTZERS

WIEDERGABE DER INFOR-
MATIONSEINHEIT AB-
HÄNGIG VON AUSWAHL-
KRITERIUM

FIG. 1

FIG. 4

MAXIMALE
ENTFERNUNG

Y MAX

Y MIN

X MIN

X MAX

MITTLERE
GESCHWINDIGKEIT

FIG. 2

FIG. 3